(19) Europäisches Patentamt
European Patent Office
Office européen des brevets

(11) **EP 4 654 499 A1**

(12) **EUROPEAN PATENT APPLICATION**
published in accordance with Art. 153(4) EPC

(43) Date of publication:
**26.11.2025  Bulletin 2025/48**

(21) Application number: **23920951.3**

(22) Date of filing: **29.12.2023**

(51) International Patent Classification (IPC):
***H04L 1/00*** *(2006.01)*

(52) Cooperative Patent Classification (CPC):
**H04L 1/00**

(86) International application number:
**PCT/CN2023/143519**

(87) International publication number:
**WO 2024/164762 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.02.2023  CN 202310151615**

(71) Applicant: **ZTE Corporation
Shenzhen, Guangdong  518057 (CN)**

(72) Inventors:
• **LI, Liguang
Shenzhen, Guangdong 518057 (CN)**
• **DUAN, Xiangyang
Shenzhen, Guangdong 518057 (CN)**
• **XU, Jin
Shenzhen, Guangdong 518057 (CN)**
• **LIANG, Chulong
Shenzhen, Guangdong 518057 (CN)**
• **YU, Guanghui
Shenzhen, Guangdong 518057 (CN)**
• **FU, Qiang
Shenzhen, Guangdong 518057 (CN)**
• **KANG, Jian
Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **DATA TRANSMISSION METHODS, COMMUNICATION APPARATUSES, AND STORAGE MEDIUM**

(57)    Disclosed in the present disclosure are data transmission methods, communication apparatuses, and a storage medium, which relate to the technical field of communications, and can solve the problem of low error correction performance. A method is applied to a first node, the method comprising: performing error correction coding on a first bit sequence to obtain a second bit sequence; performing bit selection on the second bit sequence to obtain a third bit sequence; on the basis of a target sub-sequence, performing interleaving processing on the third bit sequence to obtain an interleaved fourth bit sequence, the target sub-sequence being a sub-sequence of the first bit sequence or a sub-sequence of the second bit sequence, and the length of the target sub-sequence being an integer greater than 0; and sending the fourth bit sequence.

FIG. 3

## Description

The present disclosure claims a priority to Chinese Patent Application No. 202310151615.3, filed on February 9, 2023, which is hereby incorporated by reference in its entirety.

TECHNICAL FIELD

The present disclosure relates to the technical field of communications, and in particular, to a data transmission method, a communication apparatus, and a storage medium.

BACKGROUND

With the development of industries such as intelligent transportation, intelligent industrial control, and intelligent logistics, different user devices in wireless communication networks, upon performing data transmission, put forward very high requirements (e.g., an ultra-low latency and an ultra-high reliability performance requirement) on at least one of the following performance: a data transmission rate, a throughput, reliability, and a latency.

In order to meet the above-mentioned high performance requirements, a transmitting end adds some redundant information to data to be transmitted through channel coding, so that a receiving end may recover the data to be transmitted through the redundant information, thereby eliminating a portion of the distortion caused during a data transmission process, and further improving the performance of data transmission. However, the above method has little effect on eliminating distortion, and cannot better improve the performance of data transmission, which makes the error correction performance of the method low, and further leads to poor robustness of the wireless communication network.

SUMMARY

There is provided a data transmission method, a communication apparatus, and a storage medium in the present disclosure, which are used to solve a problem of low error correction performance.

In a first aspect, a data transmission method is provided, which is applied to a first node, and the method includes: performing error correction coding on a first bit sequence to obtain a second bit sequence; performing bit selection on the second bit sequence to obtain a third bit sequence; performing interleaving processing on the third bit sequence based on a target sub-sequence to obtain an interleaved fourth bit sequence, where the target sub-sequence is a sub-sequence of the first bit sequence or a sub-sequence of the second bit sequence, and a length of the target sub-sequence is an integer greater than 0; and sending the fourth bit sequence.

In a second aspect, a data transmission method is provided, which is applied to a second node, and the method includes: receiving a fourth bit sequence from a first node, where the fourth bit sequence is obtained by performing interleaving processing on a third bit sequence based on a target sub-sequence of a second bit sequence, the second bit sequence is obtained by performing error correction coding on a first bit sequence, and the third bit sequence is obtained by performing bit selection on the second bit sequence, a length of the target sub-sequence is an integer greater than 0; and performing error correction decoding on the fourth bit sequence based on information of the target sub-sequence.

In a third aspect, a communication apparatus is provided, and the apparatus includes: a communication unit and a processing unit; the processing unit is configured to perform error correction coding on a first bit sequence to obtain a second bit sequence; perform bit selection on the second bit sequence to obtain a third bit sequence; perform interleaving processing on the third bit sequence based on a target sub-sequence to obtain an interleaved fourth bit sequence, where the target sub-sequence is a sub-sequence of the first bit sequence or a sub-sequence of the second bit sequence, and a length of the target sub-sequence is an integer greater than 0; and the communication unit is configured to send the fourth bit sequence.

In a fourth aspect, a communication apparatus is provided, and the apparatus includes: a communication unit and a processing unit; the communication unit is configured to receive a fourth bit sequence from a first node, where the fourth bit sequence is obtained by performing interleaving processing on a third bit sequence based on a target sub-sequence of a second bit sequence, the second bit sequence is obtained by performing error correction coding on a first bit sequence, and the third bit sequence is obtained by performing bit selection on the second bit sequence, a length of the target sub-sequence is an integer greater than 0; and the processing unit is configured to perform error correction decoding on the fourth bit sequence based on information of the target sub-sequence.

In a fifth aspect, a communication apparatus is provided, and the apparatus may implement functions performed in the various above-mentioned aspects or various possible designs, and the functions may be implemented through hardware. For example, in a possible design, the apparatus may include: a processor and a communication interface, and the processor may be configured to support the apparatus to implement the functions (e.g., the processor sends the fourth bit sequence through the communication interface) involved in any possible design of the above-mentioned first aspect or second aspect.

In yet another possible design, the apparatus may further include a memory, and the memory is configured to store computer execution instructions and data necessary for the apparatus. In response to that the apparatus is running, the processor executes the computer execution instructions stored in the memory, to enable the apparatus to perform the data transmission method of any possible design of the above-mentioned first aspect or second aspect.

In a sixth aspect, a computer-readable storage medium is provided, and the computer-readable storage medium may be a readable non-volatile storage medium, and the computer-readable storage medium stores computer instructions or programs, in response to that the computer instructions or programs are run on a computer, the computer is enabled to perform the data transmission method of any possible design of the above-mentioned first aspect or second aspect.

In a seventh aspect, a computer program product including instructions is provided, and in response to that the instructions are run on a computer, the computer is enabled to perform the data transmission method of any possible design of the above-mentioned first aspect or second aspect.

## BRIEF DESCRIPTION OF THE DRAWINGS

FIG. 1 is a structural schematic diagram of a communication system provided in the embodiments of the present disclosure.

FIG. 2 is a structural schematic diagram of a communication apparatus provided in the embodiments of the present disclosure.

FIG. 3 is a flowchart of a data transmission method provided in the embodiments of the present disclosure.

FIG. 4A is a schematic diagram of a column of block interleaving provided in the embodiments of the present disclosure.

FIG. 4B is a schematic diagram of a row of block interleaving provided in the embodiments of the present disclosure.

FIG. 5 is a schematic diagram of circular interleaving provided in the embodiments of the present disclosure.

FIG. 6 is a schematic diagram of block interleaving provided in the embodiments of the present disclosure.

FIG. 7 is a schematic diagram of a bit sequence provided in the embodiments of the present disclosure.

FIG. 8 is a schematic diagram of another bit sequence provided in the embodiments of the present disclosure.

FIG. 9 is a schematic diagram of yet another bit sequence provided in the embodiments of the present disclosure.

FIG. 10 is a schematic diagram of a performance comparison provided in the embodiments of the present disclosure.

FIG. 11 is a flowchart of another data transmission method provided in the embodiments of the present disclosure.

FIG. 12 is a flowchart of yet another data transmission method provided in the embodiments of the present disclosure.

FIG. 13 is a structural schematic diagram of another communication apparatus provided in the embodiments of the present disclosure.

FIG. 14 is a structural schematic diagram of yet another communication apparatus provided in the embodiments of the present disclosure.

FIG. 15 is a structural schematic diagram of yet another communication apparatus provided in the embodiments of the present disclosure.

## DETAILED DESCRIPTION

The technical solutions in the embodiments of the present disclosure will be described clearly and completely with combination of the accompanying drawings in the embodiments of the present disclosure below.

In the description of the present disclosure, unless otherwise specified, "/" means an "or" relationship, for example, "A/B" may represent A or B. "And/or" in the present disclosure is just an association relationship that describes relevant objects, indicating that three relationships can exist. For example, A and/or B may mean these three situations: A exists alone; A and B exist simultaneously; or B exist alone. In addition, "at least one" represents a number of one or more, and "a plurality of" represents a number more than two. The wordings, such as "first" and "second" do not limit quantity or an execution order, and the wordings such as "first" and "second" do not limit that object are different, either. "At least one of the following (items)" or similar expressions thereof refers to any combination of these items, which includes any combination of a single item or multiple items. For example, at least one of a, b, or c may refer to: a, b, c, a-b, a-c, b-c, or a-b-c, where a, b and c may be single or plural.

It should be noted that in the present disclosure, wordings, such as "exemplarily" or "for example" and variations thereof are used to indicate examples, illustrations, or clarifications. Any embodiment or design solution described in the present disclosure as "exemplarily" or "for example" should not be illustrated as being more preferred or advantageous over other embodiments or design solutions. Specifically, the usage of the wordings such as "exemplarily" or "for example" is intended to present relevant concepts in a concrete way.

With the rapid development of technologies such as big data, cloud computing, latency-sensitive network, etc., a number of user equipment in a wireless communication network shows explosive growth, and thus the wireless communication network may carry diverse applications and massive data. However, with the development of industries such as intelligent transportation, intelligent industrial control, and intelligent logistics, different user devices in wireless communication networks, upon performing data transmission, put forward very high requirements (e.g., an ultra-low latency and an ultra-high reliability performance requirement) on at least one of the following performance: a data transmission rate, a throughput, reliability, and a latency.

Currently, a data transmission method in a wireless communication network is mainly as follows: a transmitting end performs channel coding on data to be transmitted to obtain a bit sequence, then maps the bit sequence into a constellation modulated symbol, and sends the constellation modulated symbol to a receiving end. Correspondingly, the receiving end needs to perform channel decoding on the received constellation modulated symbol, so as to recover the data to be transmitted. Since in a data transmission channel, transmitted data may be affected due to factors such as multipath, noise, and interference, an error may occur in the data to be transmitted. The transmitting end adds some redundant information to the data to be transmitted through channel coding, so that the receiving end may recover the data to be transmitted through the redundant information, thereby eliminating a portion of the distortion caused during a data transmission process.

However, the above-mentioned current data transmission method has little effect on eliminating distortion, and some distortion cannot be eliminated, thereby some distortion cannot be eliminated, and the performance of data transmission cannot be better improved, which makes the error correction performance of this method low, and further leads to poor robustness of the wireless communication network.

Based on this, the embodiments of the present disclosure provides a data transmission method, where a first node performs error correction coding on a first bit sequence to obtain a second bit sequence, and performs bit selection on the second bit sequence to obtain a third bit sequence. Next, the first node performs interleaving processing on the third bit sequence based on a target sub-sequence (i.e., a sub-sequence of the first bit sequence, or a sub-sequence of the second bit sequence, and a length of the target sub-sequence is an integer greater than 0) to obtain an interleaved fourth bit sequence, and sends the fourth bit sequence to a second node. In this way, the first node of the present disclosure may not only eliminate data distortion through error correction coding, but also eliminate data distortion by adaptively performing interleaving on the third bit sequence (i.e., performing interleaving on the third bit sequence based on an adaptive target sub-sequence determined from each first bit sequence or second bit sequence). It can be seen that the data transmission method provided in the present disclosure has a greater effect on eliminating distortion, can better improve the performance of data transmission, thereby improving the error correction performance of the data transmission method provided in the present disclosure, and improving the robustness of the wireless communication network.

Technical solutions provided in the embodiments of the present disclosure may be applied to various communication systems, for example, a new radio (New Radio, NR) communication system using 5th generation mobile communication technology (5G) communication technology, a future evolution system, or a multi-communication convergence system, etc.

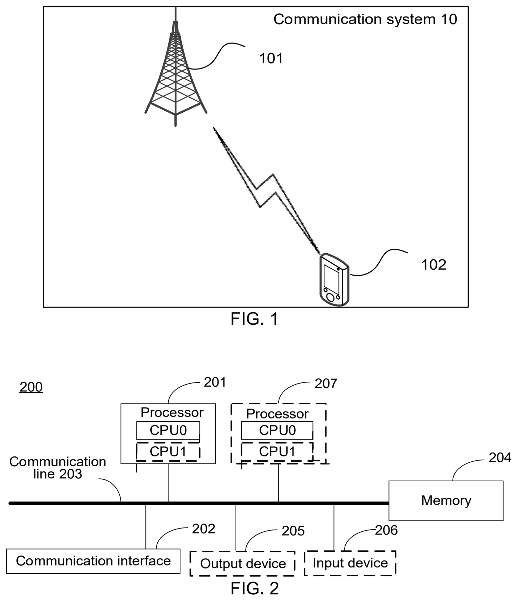

Exemplarily, FIG. 1 is a structural schematic diagram of a communication system 10 provided in the embodiments of the present disclosure. The communication system 10 may include a first node 101 and a second node 102, and the first node 101 may be in communication connection with the second node 102.

Herein, the first node 101 or the second node 102 may be a device with a wireless communication function, and may be deployed on land (including indoors or outdoors, handheld, wearable or vehicle-mounted); or may also be deployed on the water surface (such as on ships, etc.); may further be deployed in the air (for example, on airplanes, balloons and satellites, etc.). A terminal device may also be referred to as a user equipment (UE), a mobile station (MS), a mobile terminal (MT) or a terminal, which is a device that provides voice and/or data connectivity to a user. For example, the terminal device includes a handheld device or a vehicle-mounted device, etc., with a wireless connection function. At present, the terminal device may be: a mobile phone, a tablet computer, a notebook computer, a handheld computer, a mobile internet device (MID), a wearable device (such as a smart watch, a smart bracelet, a pedometer, etc.), a vehicle-mounted device (the vehicle may be, for example, a car, a bicycle, an electric train, a plane, a ship, a train, a high-speed railway, etc.), a virtual reality (VR) device, an augmented reality (AR) device, a wireless terminal in industrial control, a smart home device (such as a refrigerator, a television, an air conditioner, a meter, etc.), an intelligent robot, a workshop equipment, a wireless terminal in self driving, a wireless terminal in remote medical surgery, a wireless terminal in smart grid, a wireless terminal in transportation safety, a wireless terminal in smart city, or a wireless terminal in smart home, a flight device (such as a smart robot, a hot air balloon, a drone, an airplane), etc.

The first node 101 or the second node 102 may also be a device having a wireless transceiving function or a chip or chip system that may be arranged in the device. The first node 101 or the second node 102 includes, but is not limited to: a small base station, a wireless access point, a transmission receive point (TRP), a transmission point (TP), a macro base station, a relay base station and any node of other access nodes.

It should be noted that FIG. 1 is merely an exemplary framework diagram, and a number of nodes and names of the various devices included in FIG. 1 are not limited. In addition to functional nodes shown in FIG. 1, the communication system 10 may further include other nodes, such as a third node. Optionally, the above-mentioned third node may be a core network device, and the above is merely an exemplary illustration of the third node, and the third node may further be other devices, which is not limited in the present disclosure.

Application scenarios of the embodiments of the present disclosure are not limited. The system architecture and service scenarios described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of network architecture and the emergence of new service scenarios, the technical solutions provided in the embodiments of the present disclosure are also applicable to similar technical problems.

In a specific implementation, the devices in FIG. 1 may all adopt a composition structure shown in FIG. 2, or include components shown in FIG. 2. FIG. 2 is a schematic diagram of a composition of a communication apparatus 200 provided in the embodiments of the present disclosure. The communication apparatus 200 may be the first node 101, or a chip or a system on chip in the first node 101. Alternatively, the communication apparatus 200 may be the second node 102, a chip or a system on chip in the second node 102. As shown in FIG. 2, the communication apparatus 200 includes a processor 201, a communication interface 202, and a communication line 203.

Furthermore, the communication apparatus 200 may further include a memory 204. Herein, the processor 201, the memory 204 and the communication interface 202 may be connected through the communication line 203.

Herein, the processor 201 is a CPU, a general processor, a network processor (NP), a digital signal processor (DSP), a microprocessor, a microcontroller, a programmable logic device (PLD), or any combination thereof. The processor 201 may also be other apparatuses with processing functions, such as a circuit, a device or a software module, which is not limited.

The communication interface 202 is configured to communicate with other devices or communication networks. The communication network may be an Ethernet, a radio access network (RAN), a wireless local area network (WLAN), or the like. The communication interface 202 may be a module, a circuit, a communication interface or other apparatus capable of implementing communication.

The communication line 203 is configured to transmit information between components included in the communication apparatus 200.

The memory 204 is configured to store instruction(s). Herein, the instructions may be computer programs.

Herein, the memory 204 may be a read-only memory (ROM) or other types of static storage devices that are capable of storing static information and/or instructions, may also be a random access memory (RAM) or other types of dynamic storage devices that are capable of storing information and/or instructions, or may also be an electrically erasable programmable read-only memory (EEPROM), a compact disc read-only memory (CD-ROM) or other optical disc memories, optical disc storage (including a compact disc, a laser disc, an optical disc, a digital versatile disc, a Blu-ray disc, or the like), a magnetic disk storage medium or other magnetic storage devices, which is not limited thereto.

It should be noted that, the memory 204 may exist independently from the processor 201, or may be integrated with the processor 201. The memory 204 may be used to store instructions or program codes or some data, etc. The memory 204 may be located inside the communication apparatus 200 or outside the communication apparatus 200, which is not limited thereto. The processor 201 is configured to perform instructions stored in the memory 204, to implement an antenna parameter determination method provided below in the embodiments of the present disclosure.

In an example, the processor 201 may include one or more CPUs, such as CPU0 and CPU1 in FIG. 2.

As an optional implementation, the communication apparatus 200 may include a plurality of processors, such as including a processor 207 besides the processor 201 in FIG. 2.

As another implementation, the communication apparatus 200 may further include an output device 205 and an input device 206. Exemplarily, the input device 206 is a device such as a keyboard, a mouse, a microphone or a joystick, etc., and the output device 205 is a device such as a display screen and a speaker, etc.

It should be noted that, the communication apparatus 200 may be a desktop computer, a portable computer, a network server, a mobile phone, a tablet computer, a wireless terminal, an embedded device, a chip system, or a device with a similar structure as shown in FIG. 2. In addition, the composition structure shown in FIG. 2 does not constitute a limitation on the various devices in FIGs. 1 and 2. In addition to the components shown in FIG. 2, the various devices in FIGs. 1 and 2 may include more or fewer components than the components shown in the figures, or certain components can be combined, or the components can be arranged differently.

In the embodiments of the present disclosure, a chip system may be composed of chips, or may include chips and other discrete assemblies.

In addition, actions, terms, etc., involved in the various embodiments of the present disclosure may refer to each other, which is not limited thereto. Message names or parameter names in the messages interacted between the various devices in the embodiments of the present disclosure are merely examples, and other names may be adopted in specific implementations, which is not limited thereto.

A data transmission method provided in the embodiments of the present disclosure is described as follows in conjunction with the communication system shown in FIG. 1. Herein, actions, terms, etc., involved in the various embodiments of the present disclosure may refer to each other, which is not limited thereto. Message names or parameter names in the messages interacted between the various devices in the embodiments of the present disclosure are merely examples, and other names may be adopted in specific implementations, which is not limited thereto. The actions involved in the various embodiments of the present disclosure are merely examples, and other names may be used in specific implementations. For example, "included in" or variations thereof in the embodiments of the present disclosure may be replaced by "carried on" or "carried in" or variations thereof, etc.

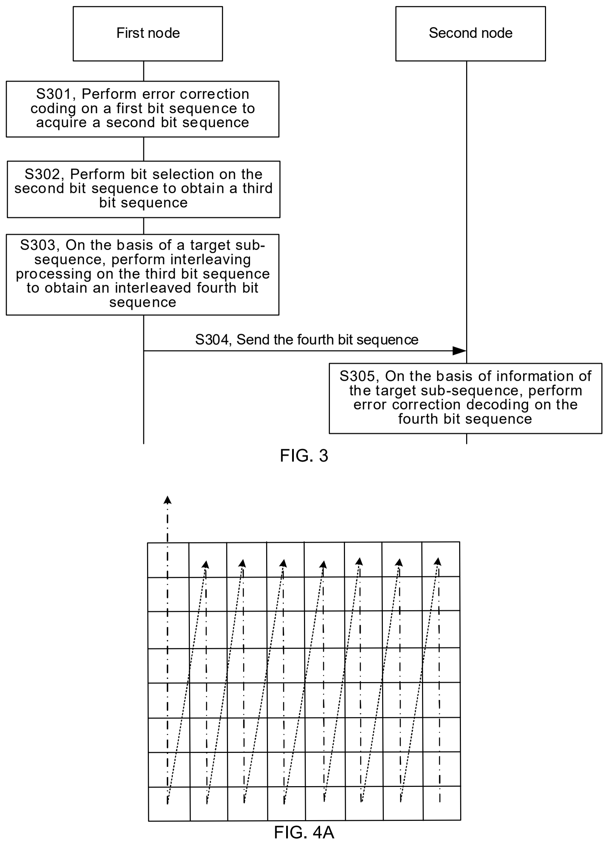

FIG. 3 is a flowchart of a data transmission method provided in the embodiments of the present disclosure, as shown in FIG. 3, the method may include S301-S305.

In S301, a first node performs error correction coding on a first bit sequence to obtain a second bit sequence.

As a possible implementation, an implementation process of the above S301 may be: the first node may add some redundant bits to the first bit sequence to obtain the second bit sequence, and the above method for obtaining the second bit sequence is an error correction coding method (or referred to as a systematic coding method). The above-mentioned redundant bits may be referred to as a parity bit for error correction coding.

In an example, the first bit sequence may be 128 bits, and the second bit sequence obtained after the first node performs error correction coding on the first bit sequence may be 200 bits, of which the redundant bits include 72 bits.

In another example, the first bit sequence may be 64 bits, and the second bit sequence obtained after the first node performs error correction coding on the first bit sequence may be 128 bits, of which the redundant bits include 64 bits.

Optionally, the above-mentioned error correction coding method may further include at least one of: low density parity check (LDPC) coding, Turbo coding, Polar coding, and convolution coding.

LDPC coding refers to be defined by a sparse (or low-density) parity-check matrix, and decoding performance may be improved by iterative decoding, such as using belief propagation decoding.

Polar coding refers to a linear block code proposed based on the channel polarization theory. In a case where the length of the first bit sequence is infinitely extended, the first node may make the second bit sequence obtained after encoding reach the Shannon limit based on the above Polar coding. Exemplarily, the Polar coding is defined by an n-order Kronecker product of a matrix G, where the matrix G is a 2-by-2 (i.e., 2-row, 2-column) matrix (e.g., [1 0; 1 1]). Optionally, Polar coding generally adopts a Successive Cancellation List (SCL) decoding algorithm.

Turbo coding is a parallel concatenated convolutional code, that is, two or more component codes are encoded in parallel to obtain the second bit sequence. Exemplarily, Turbo coding is a coding method defined by a long term evolution (LTE) system, and may include 2-way component codes and system bits, and a mother code rate is 1/3.

Convolution coding refers to dividing a first bit sequence into bit groups consisting of one or more bits, where the coded output bits of each bit group are not only related to the bits of the bit group at the current moment, but also related to the bits of other bit groups at historical moments.

In a possible implementation, the first bit sequence is determined based on a transport block to be transmitted. A valid information bit is composed of an information sequence and a cyclic redundancy check (CRC) parity sequence. The first bit sequence is composed of valid information bits and padding bits. Herein, a transport block size (TBS) of the transport block is an integer greater than 0, and a length of the CRC parity sequence is an integer greater than 0.

In some examples, a CRC parity sequence is added to a transport block to be transmitted to obtain a bit sequence to be segmented in a level of code block; when the bit sequence to be segmented in a level of code block is segmented into code blocks, if there is only one code block, the information sequence is the bit sequence to be segmented in a level of code block. As another example, when a bit sequence to be segmented in a level of code block is segmented into code blocks, if there is more than one code block, the information sequence is a sub-block obtained after segmenting the code blocks. Herein, a transport block size (TBS) of the transport block is an integer greater than 0, and a length of the CRC parity sequence is an integer greater than 0.

The first bit sequence may be a bit sequence input into the error correction coding, and a length of the first bit sequence is an integer greater than 0. The second bit sequence is an output bit sequence that has been performed error correction coding, and a length of the second bit sequence is an integer greater than 0.

In combination with the above implementation, the transport block size of the transport block to be transmitted may be smaller than or equal to a first preset threshold (i.e., T1). In an example, T1 be an integer greater than or equal to 64. As another example, T1 may also be other values, such as 96, 128, 176, 192, 200, 256, 292, 308, 400, 512, 544, 624, 1024, or 2048. That is, in a case where a transport block size is relatively small, the data processing method is implemented, thus a better data transmission reliability gain may be obtained.

In a possible implementation, the length of the first bit sequence is shorter than or equal to a second preset threshold (i.e., T2). In an example, T2 be an integer greater than or equal to 64. As another example, T2 may also be other values, such as 96, 128, 176, 192, 200, 256, 292, 308, 400, 512, 544, 560, 624, 640, 1024, or 2048.

In a possible implementation, a length of the valid information bits is smaller than or equal to a second preset threshold (i.e., T2). In an example, T2 be an integer greater than or equal to 64. As another example, T2 may also be other values, such as 96, 128, 176, 192, 200, 256, 292, 308, 400, 512, 544, 560, 624, 640, 1024, or 2048.

Exemplarily, taking the transport block size being 48 bits and the CRC parity sequence length being 16 bits as an example, the length of the valid information bits formed by the first node based on the transport block and the CRC parity sequence is 64 bits. Taking the length of valid information bits being 64 bits and a number of padding bits as 2 as an example, the first node may obtain a first bit sequence with a length of 66 bits.

In S302, the first node performs bit selection on the second bit sequence to obtain a third bit sequence.

As an optional implementation, an implementation process of the above S302 may be: the first node may determine a starting position (i.e., an index of a first bit (i.e., a foremost bit) of the third bit sequence in the second bit sequence) for the bit selection based on a redundant version. The first node may determine a number of resources that need to be allocated, and determine a length of the third bit sequence based on the number of the above-mentioned resources. Next, the first node may determine the third bit sequence from the second bit sequence in a cyclic selection manner based on the starting position and the length of the third bit sequence. The third bit sequence is an output bit sequence through bit selection or an output bit sequence through rate matching, and the length of the third bit sequence is an integer greater than 0.

As an optional implementation, the implementation process of the above S302 may be: the first node may determine the starting position for the bit selection based on the redundancy version. The first node may determine a number of resources that need to be allocated, and determine a length of the third bit sequence based on the number of the above-mentioned resources. Then, the first node may select elements from the second bit sequence in a cyclic selection manner based on the starting position of the third bit sequence and the length of the third bit sequence, and in a case where a selected element is not an element in the target sub-sequence, the first node determines that the selected element is an element of the third bit sequence. That is, the third bit sequence does not include any element of the target sub-sequence. The first node determines the third bit sequence based on the above-mentioned selected elements and an order of selection.

As another optional implementation, the implementation process of S302 may be: the first node may first remove the target sub-sequence from the second bit sequence to obtain a fifth bit sequence, and determine a starting position corresponding to the redundant version as the starting position of the third bit sequence. The first node may determine a number of resources allocated for the first bit sequence, and determine the length of the third bit sequence based on the number of above-mentioned resources. In this way, the first node may determine the third bit sequence from the second bit sequence in a cyclic selection manner based on the starting position of the third bit sequence and the length of the third bit sequence.

Optionally, if the length of the third bit sequence is greater than the length of the second bit sequence, the first node may repeatedly select elements from the second bit sequence. Exemplarily, if an index sequence of the second bit sequence is {0, 1, 2, 3, 4, 5}, and a starting position is 2, and a length of the third bit sequence is 8, the first node may determine that an index sequence of the third bit sequence is {2, 3, 4, 5, 0, 1, 2, 3} based on the above information.

Optionally, an index corresponding to an element of the target sub-sequence in the second bit sequence is different from an index corresponding to an element of the third bit sequence in the second bit sequence. Exemplarily, if the index sequence of the second bit sequence is {0, 1, 2, 3, 4, 5, 6, 7}, the starting position is 2, a corresponding index of an element of the target sub-sequence in the second bit sequence is {0, 1}, and the length of the third bit sequence is 6 bits, then the first node may determine that the index sequence of the third bit sequence is {2, 3, 4, 5, 6, 7} based on the above information. If the length of the third bit sequence is 8 bits, the first node may determine that the index sequence of the third bit sequence is {2, 3, 4, 5, 6, 7, 2, 3} based on the above information. If the length of the third bit sequence is 4 bits, the first node may determine that the index sequence of the third bit sequence is {2, 3, 4, 5} based on the above information.

In S303, the first node performs interleaving processing on the third bit sequence based on a target sub-sequence to obtain an interleaved fourth bit sequence.

Herein, the target sub-sequence is a sub-sequence of the first bit sequence or a sub-sequence of the second bit sequence. The length of the target sub-sequence is an integer greater than 0. A length of the fourth bit sequence is an integer greater than 0.

In some embodiments, the target sub-sequence does not include a padding bit. Exemplarily, if there is a padding bit in the first bit sequence, the target sub-sequence does not include a padding bit.

In some embodiments, the target sub-sequence does not include a system puncturing bit. In a codeword output from the error correction coding, a system bit that is never transmitted in transmitted data may be referred to as a system puncturing bit. In the codeword output from the error correction coding, all system puncturing bits may constitute a system puncturing sequence.

In some embodiments, the first node may obtain the first bit sequence based on valid information bits, where the target sub-sequence includes bits in the valid information bits. The first node may obtain the first bit sequence by adding 0 or a plurality of padding bits to the valid information bits.

In some embodiments, the interleaving process includes: circular interleaving processing and/or block interleaving processing.

Optionally, the above-mentioned circular interleaving processing includes at least one of: left circular shift interleaving, right circular shift interleaving, upper circular shift interleaving, or lower circular shift interleaving. Generally, the above-mentioned left circular shift interleaving and right circular shift interleaving are applied to a row vector sequence (i.e., a sequence whose elements are arranged in rows), while the upper circular shift interleaving and the lower circular shift interleaving are applied to a column vector sequence (i.e., a sequence whose elements are placed in columns).

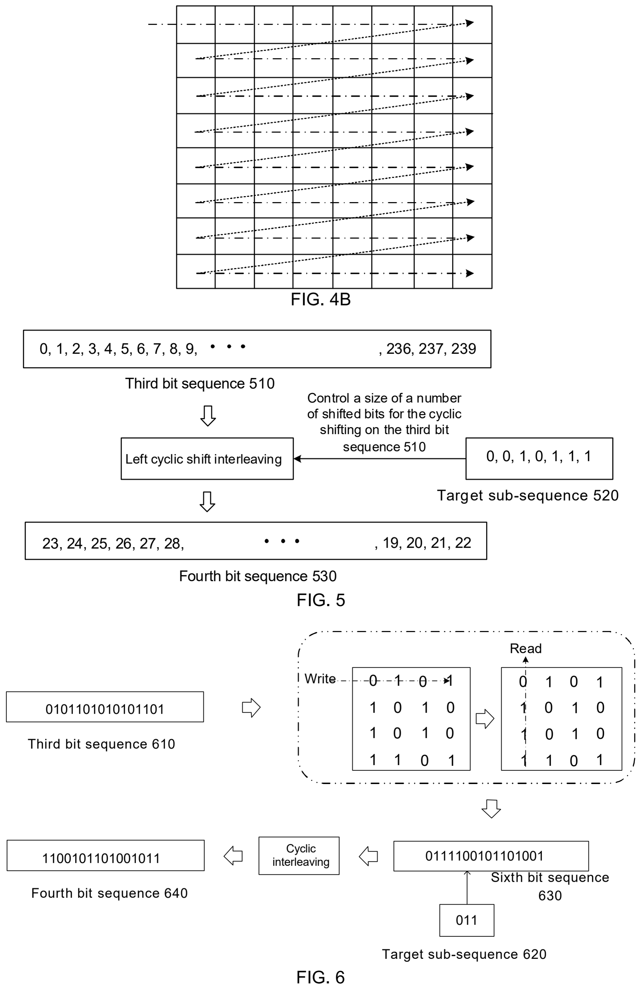

The block interleaving process includes at least one of: writing by row and reading by column, and writing by column and reading by row. If the block interleaving process is writing by row and reading by column, the first node writes in a direction indicated by an arrow in FIG. 4B, and reads in a direction indicated by an arrow in FIG. 4A. If the block interleaving process is writing by column and reading by row, the first node first writes in a column direction and then reads in a row direction.

Optionally, in a case where the length (denoted as E) of the third bit sequence is relatively long, a number of rows or columns for block interleaving is determined by the length of the third bit sequence. In an optional example, a difference between the number of rows and the number of columns for the block interleaving is not greater than 1.

In a possible implementation, the number of rows for the block interleaving is r, and the number of columns for the block interleaving is c, where r and c are positive integers.

Optionally, r is an integer obtained by taking a logarithm of E with a base 2 and then rounding down the obtained logarithm value, and r satisfies the following formula 1:

$$\mathrm{r} = \left\lfloor \log_2(\mathrm{E}) \right\rfloor \qquad\qquad \text{Formula 1}$$

c is a smallest integer greater than or equal to a real number obtained by dividing E by r (that is, an integer obtained by rounding up a real number obtained by dividing E by r), and c satisfies the following formula 2:

$$c = \left\lceil E/r \right\rceil \qquad\qquad \text{Formula 2}$$

Optionally, r is a smallest integer greater than or equal to a real number obtained by dividing E by c (that is, an integer obtained by rounding up a real number obtained by dividing E by c). r satisfies the following formula 3:

$$r = \left\lceil E/c \right\rceil \qquad\qquad \text{Formula 3}$$

c is an integer obtained by taking a logarithm of E with a base 2 and then rounding down the obtained logarithm value. c satisfies the following formula 4:

$$c = \left\lfloor \log_2(\mathrm{E}) \right\rfloor \qquad\qquad \text{Formula 4}$$

The implementation process of S303 is described below in combination with the above different interleaving processing modes.

In a case where the above-mentioned interleaving processing is circular interleaving processing, the implementation process of the above-mentioned S303 is: the first node may determine a decimal value (i.e., a number of shift bits) corresponding to the target sub-sequence, and perform a circular shifting on the third bit sequence based on the decimal value corresponding to the above-mentioned target sub-sequence to obtain the interleaved fourth bit sequence.

Exemplarily, as shown in FIG. 5, an index sequence of the third bit sequence 510 may be {0, 1, 2, 3, 4, 5, 6, 7, 8, 9, ..., 236, 237, 238, 239}, and a data bit sequence of the target sub-sequence 520 may be {0, 0, 1, 0, 1, 1, 1}, the target sub-sequence 520 may be used to control a size of a number of shifted bits for the circular shifting on the third bit sequence. In this example, the first node may convert the data bit sequence of the above-mentioned target sub-sequence 520 to a decimal value (i.e., S=23), and perform left circular shifting on the third bit sequence 510 with 23 bits, that is, an bit with an index of 23 in the third bit sequence 510 is used as a bit with an index of 0 in the interleaved fourth bit sequence 530, and a bit with an index of 24 in the third bit sequence 510 is used as a bit with an index of 1 in the interleaved fourth bit sequence 530, until all bits with indexes in the interleaved fourth bit sequence 530 are determined, thus the interleaved fourth bit sequence 530 is obtained.

In a case where the above-mentioned interleaving processing includes circular interleaving processing and block interleaving processing, the implementation process of the above S303 is: the first node may perform block interleaving processing on the third bit sequence to obtain a fifth bit sequence. Next, the first node determines a decimal value corresponding to the target sub-sequence, and performs a circular shifting on the fifth bit sequence based on the decimal value corresponding to the target sub-sequence to obtain the interleaved fourth bit sequence.

Exemplarily, as shown in FIG. 6, the data bit sequence of the third bit sequence 610 is {0, 1, 0, 1, 1, 0, 1, 0, 1, 0, 1, 1, 0, 1}, and the data bit sequence of the target sub-sequence 620 is {0, 1, 1}. In this example, the first node first writes data bits in the third bit sequence 610 in a form of row, and reads data bits from the third bit sequence 610 in a form of column to obtain a sixth bit sequence 630 after being performed the block interleaving (e.g., a data bit sequence of the sixth bit sequence 630 is {0, 1, 1, 1, 1, 0, 0, 1, 1, 0, 1, 0, 0, 1}). Next, the first node may convert the data bit sequence of the target sub-sequence 620 into a decimal value (i.e., 3), and perform left circular shifting on the sixth bit sequence 630 with 3 bits, i.e., an bit with an index of 3 in the sixth bit sequence 630 is used as an bit with an index of 0 in the interleaved fourth bit sequence 640, and an bit with an index of 4 in the sixth bit sequence 630 is used as an bit with an index of 1 in the interleaved fourth bit sequence 640, until all bits with indexes in the interleaved fourth bit sequence 640 are determined, thus the interleaved fourth bit sequence 640 is obtained (for example, a data bit sequence of the fourth bit sequence 640 is {1, 1, 0, 0, 1, 0, 1, 0, 1, 0, 0, 1, 1}).

In some embodiments, the target sub-sequence is composed of one or more consecutive bits of the second bit sequence.

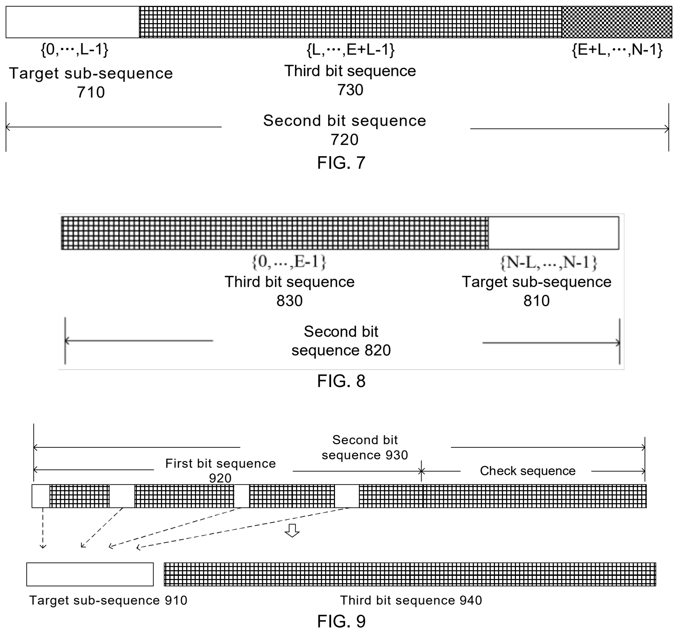

In an example (denoted as Example 1), as shown in FIG. 7, the target sub-sequence 710 may be a sub-sequence (i.e., {0, 1, ..., L-1}, and L is a positive integer) located at a head of the second bit sequence 720.

In another example (denoted as Example 2), as shown in FIG. 8, the target sub-sequence 810 may be a sub-sequence (i.e., {N-L, N-L+1, N-L+2, ..., N-1}, and N is a positive integer) located at a tail of the second bit sequence 820, and N is a length of the second bit sequence

Optionally, the third bit sequence may also be composed of one or more consecutive bits of the second bit sequence. In combination with the above example 1, as shown in FIG. 7, the third bit sequence 730 may be a sub-sequence (i.e., {L, ..., E+L-1}) located in the middle of the second bit sequence 720. In combination with the above example 2, as shown in FIG. 8, the third bit sequence 830 may be a sub-sequence (i.e., {0, ..., E-1}) located in the head of the second bit sequence 820.

It can be understood that, in this case, the first node may determine the target sub-sequence without more addressing operations, thereby reducing the complexity of the first node determining the target sub-sequence, and the process of error correction decoding of the fourth bit sequence based on the information of the target sub-sequence may also be simplified, thereby improving the efficiency of the second node in processing the fourth bit sequence.

Alternatively, the target sub-sequence is composed of one or more discrete (nonconsecutive) bits in the second bit sequence. Exemplarily (denoted as Example 3), as shown in FIG. 9, the target sub-sequence 910 may be a sub-sequence (i.e., {0, 1, 20, 21, 40, 41, 42}) located in the first bit sequence 920 or the second bit sequence 930.

Optionally, the third bit sequence may also be composed of one or more discrete bits in the second bit sequence. In combination with the above example 3, as shown in FIG. 9, the third bit sequence 940 may be a sub-sequence (i.e., {2, ..., 19, 22, ..., 39, 43, ..., 128}) located in the second bit sequence 930.

In some embodiments, an index corresponding to an element of the target sub-sequence in the second bit sequence is different from an index corresponding to an element of the third bit sequence in the second bit sequence.

That is, indexes corresponding to respective elements of the target sub-sequence in the second bit sequence constitutes a first set (denoted as A1), and indexes corresponding to respective elements of the third bit sequence in the second bit sequence constitutes a second set (denoted as A0). An intersection of above-mentioned A0 and A1 is an empty set.

In combination with the above example 1, as shown in FIG. 7, indexes corresponding to respective elements of the target sub-sequence 710 in the second bit sequence constitutes a first set (denoted as A1'), which is {0, 1, ..., L-1}. The indexes corresponding to respective elements of the third bit sequence 730 in the second bit sequence constitutes a second set (denoted A0'), which is {L, ..., E+L-1}. An intersection of above-mentioned A0' and A1' is an empty set.

In combination with the above example 2, as shown in FIG. 8, indexes corresponding to respective elements of the target sub-sequence 810 in the second bit sequence constitutes a first set (denoted as A1"), which is {N-L, N-L+1, N-L+2, ..., N-1}. The indexes corresponding to respective elements of the third bit sequence 830 in the second bit sequence constitutes a second set (denoted as A0"), which is {0, 1, ..., E-1}, where E=N-L. An intersection of above-mentioned A0" and A1" is an empty set.

In combination with the above example 3, as shown in FIG. 9, the indexes corresponding to respective elements of the target sub-sequence 910 in the second bit sequence constitutes a first set (denoted as A1'''), which is {0, 1, 20, 21, 40, 41, 42}. The indexes corresponding to respective elements of the third bit sequence 940 in the second bit sequence constitutes a second set (denoted as A0'''), which is {2, ..., 19, 22, ..., 39, 43, ..., 128}. An intersection of above-mentioned A0''' and A1''' is an empty set.

It can be understood that, an index corresponding to an element of the target sub-sequence in the second bit sequence is different from an index corresponding to an element of the third bit sequence in the second bit sequence. In this way, what the first node may send to the second node only are the data bits that need to be sent (i.e., data bits in the third bit sequence), without occupying transmission resources to send data bits that do not need to be sent (i.e., data bits in the target sub-sequence), thereby improving the efficiency of data sending, increasing the reliability performance of data transmission, and improving the robustness of the communication system.

In some embodiments, the length of the target sub-sequence is determined according to the length of the valid information bits, or the length of the first bit sequence, or the length of the third bit sequence.

As an optional implementation, the length of the target sub-sequence is determined according to the length of the valid information bits. In this case, the length of the target sub-sequence satisfies the following formula 5:

$$L=f(\log_2(K')) \qquad\qquad \text{Formula 5}$$

where L is the length of the target sub-sequence. K' is the length of effective information bits. The function f(x) represents rounding a real number x down or up, or performing a normal rounding on the real number x to obtain an integer.

As an optional implementation, the length of the target sub-sequence is determined according to the length of the first bit sequence. In this case, the length of the target sub-sequence satisfies the following formula 6:

$$L= f(\log_2 (K)) \qquad\qquad \text{Formula 6}$$

where L is the length of the target sub-sequence. K is the length of the first bit sequence. The function f(x) represents rounding a real number x down or up, or performing a normal rounding on the real number x to obtain an integer.

In a possible implementation, the length of the first bit sequence is smaller than or equal to a third preset threshold (i.e., T3). In an example, T3 is an integer greater than 128. As another example, T3 may also be other values, such as 128, 192, 200, 256, 308, 400, or 512.

In a possible implementation, the first node may determine the length of the first bit sequence based on the length of the valid information bits. Herein, the length of the valid information bits is shorter than T5. In an example, T5 may also be other values, for example, 64, 96, 128, 176, 192, 200, 256, 292, 308, 400, 512, 544, 624, 1024, or 2048.

As another optional implementation, the length of the target sub-sequence is determined according to the length of the third bit sequence. In this case, the length of the target sub-sequence satisfies the following formula 7:

$$L=f1(\log_2(E)) \qquad\qquad \text{Formula 7}$$

where E is the length of the third bit sequence. Function f1(x) represents rounding a real number x down to obtain an integer.

In an example, a length of a target sub-sequence corresponding to a third bit sequence with a length of E1 is L1, and a length of a target sub-sequence corresponding to a third bit sequence with a length of E2 is L2. If E1 is smaller than E2, then L1 is smaller than or equal to L2.

In another example, a length of a target sub-sequence corresponding to a first bit sequence with a length of K1 is L3, and a length of a target sub-sequence corresponding to a first bit sequence with a length of K2 is L4. If K1 is smaller than K2, then L3 is smaller than or equal to L4.

In another example, a length of a target sub-sequence corresponding to valid information bits with a length of K'1 is L5, and a length of a target sub-sequence corresponding to valid information bits with a length of K'2 is L6. If K'1 is smaller than K'2, then L5 is smaller than or equal to L6.

As another optional implementation, the length of the target sub-sequence is determined according to a transport block size. The first bit sequence is obtained from a transport block with a transport block size. In this case, the length of the target sub-sequence satisfies the following formula 8:

$$L=f(\log_2(TBS)) \qquad\qquad \text{Formula 8}$$

where TBS is the transport block size, which is an integer greater than 0. The function f(x) represents rounding a real number x down or up, or performing a normal rounding on the real number x to obtain an integer.

In a possible implementation, the transport block size is smaller than or equal to a fourth preset threshold (i.e., T4), and a coding rate is greater than or equal to a first code rate threshold, the fourth preset threshold is a positive integer, and the first code rate threshold is a positive real number smaller than 1. In an example, the coding rate is determined based on a modulation and coding scheme (MCS) index, and the coding rate is a positive real number smaller than 1. In an example, the first code rate threshold is equal to at least one of: 2/3, 0.67, 0.25, 0.5, 0.4, 0.6, 0.75, 0.83, 5/6. In an example, T4 may be an integer greater than or equal to 64. As another example, T4 may also be other values, such as 64, 96, 128, 176, 192, 200, 256, 292, 308, 400, 512, 544, 624, 1024, or 2048.

In a possible implementation, an implementation process of the first node performing interleaving processing on the third bit sequence based on the target sub-sequence to obtain the interleaved fourth bit sequence includes: the first node only performing interleaving processing on a first sub-sequence of the third bit sequence based on the target sub-sequence, and determining that a sequence composed of an interleaved sequence and a second sub-sequence (that is, the second sub-sequence includes the bits of the third bit sequence except the first sub-sequence) is the fourth bit sequence. The length of the first sub-sequence is shorter than or equal to the length of the third bit sequence. In some examples, an index of a first element of the first sub-sequence in the second bit sequence may be determined according to a lifting size. In a specific example, the index of the first element of the first sub-sequence in the second bit sequence may be equal to d*Z, where d is a non-negative integer and Z is a lifting size.

In some examples, the length of the first sub-sequence is equal to Z, and the index of the first element of the first sub-sequence in the second bit sequence is equal to d*Z, where d is a non-negative integer and Z is a lifting size.

In some embodiments, the length of the first sub-sequence is equal to d1*Z, and the index of the first element of the first sub-sequence in the second bit sequence is equal to d2*Z, where d1 is a positive integer, d2 is a non-negative integer, and Z is a lifting size. Herein, d1 may be equal to an integer from 1 to 68. d2 may be equal to an integer from 1 to 68. In a specific example, d2 is equal to 2.

In a possible implementation, in a case where the first sub-sequence includes d1 sub-sequences, the implementation process of the first node performing interleaving on the first sub-sequence includes: the first node performing interleaving on respective sub-sequences in the d1 sub-sequences respectively. In an example, a length of each sub-sequence of the d1 sub-sequences is equal to the lifting size. If an integer corresponding to the target sub-sequence is S (e.g., a decimal value obtained by converting the data bit sequence of the target sub-sequence is the integer S), then a number of bits for performing circular shift interleaving on an i-th sub-sequence of the d1 sub-sequences satisfies the following formula 9:

$$U_i = \text{mod}(\text{floor}(S/(Z^i)),\ Z) \hspace{3cm} \text{Formula 9}$$

where $U_i$ is the number of bits for performing circular shift interleaving on an i-th sub-sequence, and i is equal to 0 to d1-1. $\text{mod}(x1, x2)$ represents a remainder operation, for example, $\text{mod}(11,8) = 3$; $\text{floor}(x1)$ represents a rounding-down operation for the real number x, for example, $\text{floor}(2.6) = 2$; $x1 \char`^ x2$ represents a value of x1 raised to a power of x2, for example, $7\char`^2 = 49$.

In some embodiments, the target sub-sequence is determined according to one or more of: the second bit sequence, a length of the third bit sequence, a length of the first bit sequence, a length of valid information bits, a modulation order, a code rate, a number of resources, a higher layer signaling, a user equipment type, or a transport block size.

As a possible implementation, the target sub-sequence may be determined according to the second bit sequence and a higher layer signaling, and the implementation process is: each third node of at least one third node may send a higher layer signaling message to the first node. Accordingly, the first node may receive the higher layer signaling message from the at least one third node. The first node determines the target sub-sequence based on the above-mentioned higher layer signaling message.

The above-mentioned higher layer signaling message may be used to indicate the length of the target sub-sequence and the index of the first element of the target sub-sequence in the second bit sequence, or used to indicate an index of each element of the target sub-sequence in the second bit sequence. In some examples, the above-mentioned higher layer signaling message may include at least one of: downlink control information (DCI), a radio resource control (RRC) signaling, and a medium access control (MAC) signaling.

In an optional implementation, in a case where the above-mentioned higher layer signaling message includes the DCI and the RRC signaling, the above-mentioned DCI may be used to indicate the length of the target sub-sequence, and the above-mentioned RRC signaling may be used to indicate the index of the first element of the target sub-sequence in the second bit sequence. In this example, the first node may determine the index of the first element of the target sub-sequence in the second bit sequence based on the RRC signaling, and determine the length of the target sub-sequence based on the DCI. Next, the first node may sequentially read L bits from the index of the first element of the target sub-sequence in the second bit sequence, thereby obtaining the target sub-sequence. Herein, L is a positive integer.

For example, taking the example that the above-mentioned DCI may be used to indicate that the length of the target sub-sequence is 5 bits, and the above-mentioned RRC signaling may be used to indicate that the index of the first element of the target sub-sequence in the second bit sequence is 1: the first node may read 5 bits of data sequentially starting from index 1 in the second bit sequence, and then determine the target sub-sequence.

In another possible implementation, in a case where the above-mentioned higher layer signaling message includes an MAC signaling, the above-mentioned MAC signaling may be used to indicate an index of each element of the target sub-sequence in the second bit sequence. In this example, the first node may determine indexes of respective elements of the target sub-sequence in the second bit sequence based on the MAC signaling, and read data bits according to the above-mentioned indexes to determine the target sub-sequence.

Exemplarily, taking the example that the above-mentioned MAC signaling may be used to indicate that indexes of respective elements of the target sub-sequence in the second bit sequence are {0, 2, 5, 25, 40, 47, 48}: the first node may read data with indexes of 0, 2, 5, 25, 40, 47, 48 from the second bit sequence, and then determine the target sub-sequence.

It could be understood that, for the second node, the longer the target sub-sequence is, then in the process of error correction decoding for the fourth bit sequence based on information of the target sub-sequence, the more error correction decoding times the second node needs to attempt, resulting in higher complexity of error correction decoding performed by the second node. However, the longer the length of the target sub-sequence is, the better the decoding performance of the second node will be, thereby reducing the transmission power. Therefore, advantages of the first node determining the target sub-sequence according to the higher layer signaling is that the above-mentioned at least one third node may flexibly configure the length of the target sub-sequence according to a current state of a user equipment. If the second node is a power-saving device or the second node is in a low power state, the above-mentioned at least one third node may indicate a target sub-sequence with a relatively short length. If the second node is a high-end device, the above-mentioned at least one third node may indicate a target sub-sequence with a relatively long length, which may reduce the transmission power of the first node or increase the decoding performance of the second node, thereby increasing the flexibility and reliability of communication.

For example, in a case where the second node (e.g., an access network device) is in a relatively low load state (i.e., the second node is idle most of the time), the higher layer signaling may be used to indicate the first node (e.g., a user equipment) to adopt a target sub-sequence with a relatively long length to improve the receiving performance of the second node. As another example, in a case where the second node (e.g., the access network device) is in a relatively high load state (i.e., there is a large amount of data to be processed), the higher layer signaling may be used to indicate the first node (e.g., the user equipment) to adopt a target sub-sequence with a relatively short length to reduce the processing time of error correction decoding of the second node.

As another possible implementation, the target sub-sequence may be determined based on the second bit sequence, the length of the valid information bits, and the higher layer signaling, and the implementation process is: the first node may determine the index of the first element of the target sub-sequence in the second bit sequence based on the higher layer signaling, and then determine the length of the target sub-sequence based on the length of the valid information bits; finally read L bits from the second bit sequence cyclically starting from the index of the first element of the target sub-sequence in the second bit sequence to obtain the target sub-sequence.

As another possible implementation, the target sub-sequence may be determined according to the length of the second bit sequence, the third bit sequence, and the higher layer signaling, and the implementation process is: the first node may determine the length of the target sub-sequence based on the length of the third bit sequence. The above-mentioned method for the first node determining the length of the target sub-sequence based on the length of the third bit sequence may refer to the above formula 2 and the description related to the above formula 2 for understanding. The first node may determine the index of the first element of the target sub-sequence in the second bit sequence based on the higher layer signaling. The method for the first node determining the index of the first element of the target sub-sequence in the second bit sequence based on the higher layer signaling may refer to the above-mentioned description that the target sub-sequence may be determined based on the second bit sequence and the higher layer signaling for understanding. Finally, the first node may cyclically read L bits from the second bit sequence starting from the index of the first element of the target sub-sequence in the second bit sequence, and thus obtain the target sub-sequence.

As another possible implementation, the target sub-sequence may be determined according to the second bit sequence, the user equipment type, and the higher layer signaling, and the implementation process is: the first node may determine that a sequence length corresponding to the user equipment type is the length of the target sub-sequence. The first node may determine the index of the first element of the target sub-sequence in the second bit sequence based on the higher layer signaling. The method for the first node determining the index of the first element of the target sub-sequence in the second bit sequence based on the higher layer signaling may refer to the above-mentioned description that the target sub-sequence may be determined based on the second bit sequence and the higher layer signaling for understanding. Finally, the first node may cyclically read M bits indicated by the length of the target sub-sequence from the index of the first element of the target sub-sequence in the second bit sequence, thereby obtaining the target sub-sequence.

Optionally, the first node may classify a user equipment according to an uplink and downlink peak rates of the user equipment. Exemplarily, as shown in the following Table 1, the first node may determine a user equipment with a downlink peak rate of 10 megabits per second (Mbit/s) and an uplink peak rate of 5 Mbit/s as a type 1 user equipment, and may further determine a user equipment with a downlink peak rate of 50 Mbit/s and an uplink peak rate of 25 Mbit/s as a type 2 user equipment, and may further determine a user equipment with a downlink peak rate of 100 Mbit/s and an uplink peak rate of 50 Mbit/s as a type 3 user equipment, and may further determine a user equipment with a downlink peak rate of 150 Mbit/s and an uplink peak rate of 50 Mbit/s as a type 4 user equipment, and may further determine a user equipment with a downlink peak rate of 300 Mbit/s and an uplink peak rate of 75 Mbit/s as a type 5 user equipment, and may further determine a user equipment with a downlink peak rate of 300 Mbit/s and an uplink peak rate of 50 Mbit/s as a type 6 user equipment, and may further determine a user equipment with a downlink peak rate of 300 Mbit/s and an uplink peak rate of 150 Mbit/s as a type 7 user equipment, and may further determine a user equipment with a downlink peak rate of 3000 Mbit/s and an uplink peak rate of 1500 Mbit/s as a type 8 user equipment.

Optionally, the target sub-sequence may further be determined only according to the user equipment type.

Table 1

| User equipment type | 1 | 2 | 3 | 4 | 5 | 6 | 7 | 8 |
|---|---|---|---|---|---|---|---|---|
| Downlink peak rate (Mbit/s) | 10 | 50 | 100 | 150 | 300 | 300 | 300 | 3000 |
| Uplink peak rate (Mbit/s) | 5 | 25 | 50 | 50 | 75 | 50 | 150 | 1500 |

It can be understood that, for the second node, the longer the length of the target sub-sequence is, the more times the second node needs to attempt error correction decoding upon performing error correction decoding on the fourth bit sequence based on the information of the target sub-sequence, resulting in higher complexity of error correction decoding performed by the second node. However, the longer the length of the target sub-sequence is, the better the decoding performance of the second node will be, thereby reducing the transmission power. Therefore, in a case where the second node is a user equipment, the advantages of the first node determining the length of the target sub-sequence according to the user equipment type is that the first node may flexibly configure the length of the target sub-sequence adapted to the user equipment types for different user devices, thereby improving the efficiency of data transmission.

As another possible implementation, the target sub-sequence may be determined according to the second bit sequence, a modulation order, a code rate, a number of resources, and a higher layer signaling, and the implementation process thereof is: the first node may determine the length of the target sub-sequence based on the modulation order, the code rate, and the number of resources. The first node may determine the index of the first element of the target sub-sequence in the second bit sequence based on the higher layer signaling. The method for the first node determining the index of the first element of the target sub-sequence in the second bit sequence based on the higher layer signaling may refer to the above-mentioned description that the target sub-sequence may be determined based on the second bit sequence and the higher layer signaling for understanding. Finally, the first node may cyclically read L bits indicated by the length of the target sub-sequence from the index of the first element of the target sub-sequence in the second bit sequence, thereby obtaining the target sub-sequence.

Optionally, in this implementation, the length of the target sub-sequence satisfies the following formula 10:

$$L=f(\log 2(Q \times R \times Re)) \qquad \text{Formula 10}$$

where Q is a modulation order of the data to be transmitted. R is a code rate of the data to be transmitted. Re is a number of resources for data to be transmitted, and Re may be determined according to a number of resource blocks and a number of antenna layers.

It could be understood that, in this embodiment, for the first node, the first node determines the target sub-sequence based on one or more of the following: the second bit sequence, the length of the third bit sequence, the length of the first bit sequence, the length of the valid information bits, the modulation order, the code rate, the number of resources, the higher layer signaling, the user equipment type and the transport block size, which may facilitate the first node to determine the target sub-sequence and perform interleaving on the third bit sequence according to the target sub-sequence. For the second node, the second node may determine information of the target sub-sequence (e.g., the length of the target sub-sequence, or the index of the first element of the target sub-sequence in the second bit sequence) based on one or more of the following: the second bit sequence, the length of the third bit sequence, the length of the first bit sequence, the length of the valid information bits, the modulation order, the code rate, the number of resources, the higher layer signaling, the user equipment type and the transport block size, so as to facilitate the second node to perform subsequent error correction decoding and other operations, thereby improving the processing efficiency of the second node.

In S304, the first node sends the fourth bit sequence to any node. Correspondingly, any node receives the fourth bit sequence from the first node.

Herein, any node includes the second node.

It could be understood that, the first node does not need to send the target sub-sequence to the second node, which may improve data transmission efficiency and reduce data transmission power consumption.

Optionally, the first node may send the fourth bit sequence to the second node via a wired communication mode (e.g., via an optical cable), or may send the fourth bit sequence to the second node via a wireless communication mode (e.g., via a wireless bearer), which is not limited in the present disclosure.

In S305, the second node performs error correction decoding on the fourth bit sequence based on information of the target sub-sequence.

In an optional implementation, the implementation process of the above-mentioned S305 may be: the second node performs deinterleaving on the fourth bit sequence based on the information of the target sub-sequence to obtain the third bit sequence, and performs reverse bit selection on the third bit sequence to obtain the second bit sequence. Next, the second node performs error correction decoding on the second bit sequence to obtain the first bit sequence.

Optionally, an implementation process of the second node performing deinterleaving on the fourth bit sequence based on the information of the target sub-sequence to obtain the third bit sequence may be: the second node may determine a plurality of bit conversion values based on the length of the target sub-sequence, and perform deinterleaving on the fourth bit sequence based on each bit conversion value of the plurality of bit conversion values to obtain a plurality of third bit sequences to be selected. Next, the second node may determine a soft decision value of each third bit sequence to be selected of the plurality of third bit sequences to be selected, determine a best third bit sequence to be selected based on the soft decision value of each third bit sequence to be selected, and determine the best third bit sequence to be selected as the third bit sequence.

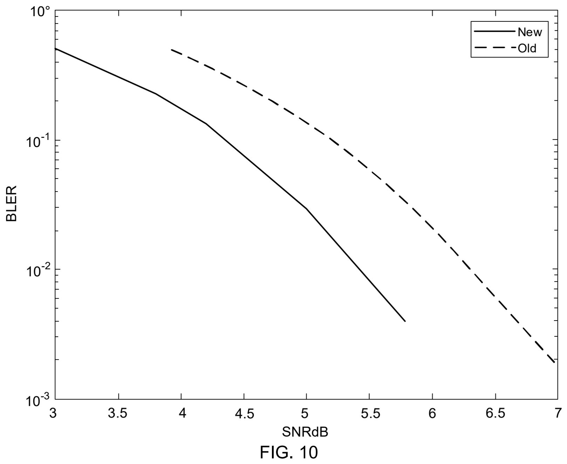

It can be understood that, as shown in FIG. 10, an abscissa in a coordinate system shown in FIG. 10 is used to represent a signal to noise ratio (SNR) of an additive white Gaussian noise channel, and a unit of the signal to noise ratio is decibel (dB). An ordinate in the coordinate system shown in FIG. 10 is used to represent a block error rate (BLER). A solid line (marked as New) shown in FIG. 10 is a performance curve obtained by performing data transmission under a target condition according to the data transmission method provided in the embodiments of the present disclosure, and a dotted line (marked as Old) shown in FIG. 10 is a performance curve obtained by performing data transmission under a target condition according to a current data transmission method (e.g., a data transmission method based on LDPC coding).

Based on FIG. 10, it can be seen that in a case where the error block rate is 0.01, a signal to noise ratio of the present disclosure is lower than a signal to noise ratio of the prior art, and a difference between the signal to noise ratio of the present disclosure and the signal to noise ratio of the prior art is about 1 decibel (dB), that is, the present disclosure may have a performance gain of about 1 dB. In a case where the signal to noise ratio is 5.5 dB, an error block rate of the present disclosure is lower than an error block rate of the prior art. The error block rate of the present disclosure may reach 8/1000, while the error block rate of the prior art is only 60/1000. Therefore, compared with the data transmission method in the prior art, the data transmission method provided in the embodiments of the present disclosure may improve the performance of data transmission.

Optionally, the data transmission method recorded by the solid line in the above FIG. 10 is a data transmission method in a case where the length of the target sub-sequence is 6 bits, the length of the third bit sequence is 86 bits, the lifting size of the parity check matrix is 11, and the index of the first element of the target sub-sequence in the second bit sequence is 22. Correspondingly, the length of the valid information bits is 64 bits, and the length of the first bit sequence is 66 bits (including a transport block with a transport block size of 48 bits (i.e., a transport block size (TBS)=48), a CRC parity sequence with a length of 16 bits, and padding bits with a length of 2 bits). Herein, the parity check matrix is determined according to the lifting size and a base matrix.

In the technical solutions provided in the embodiments of the present disclosure, the first node performs error correction coding on the first bit sequence to obtain the second bit sequence, and performs bit selection on the second bit sequence to obtain the third bit sequence. Next, the first node performs interleaving processing on the third bit sequence based on the target sub-sequence (i.e., a sub-sequence of the first bit sequence, or a sub-sequence in the second bit sequence) to obtain the interleaved fourth bit sequence, and sends the fourth bit sequence to the second node. In this way, the first node of the present disclosure may not only eliminate data distortion through error correction coding, but also eliminate data distortion by adaptively performing interleaving on the third bit sequence (i.e., performing interleaving on the third bit sequence based on an adaptive target sub-sequence determined from each first bit sequence or second bit sequence). It can be seen that the data transmission method provided in the present disclosure can eliminate data distortion effectively, and can better improve the performance of data transmission, thereby improving the error correction performance of the data transmission method provided in the present disclosure, and improving the robustness of the wireless communication network.

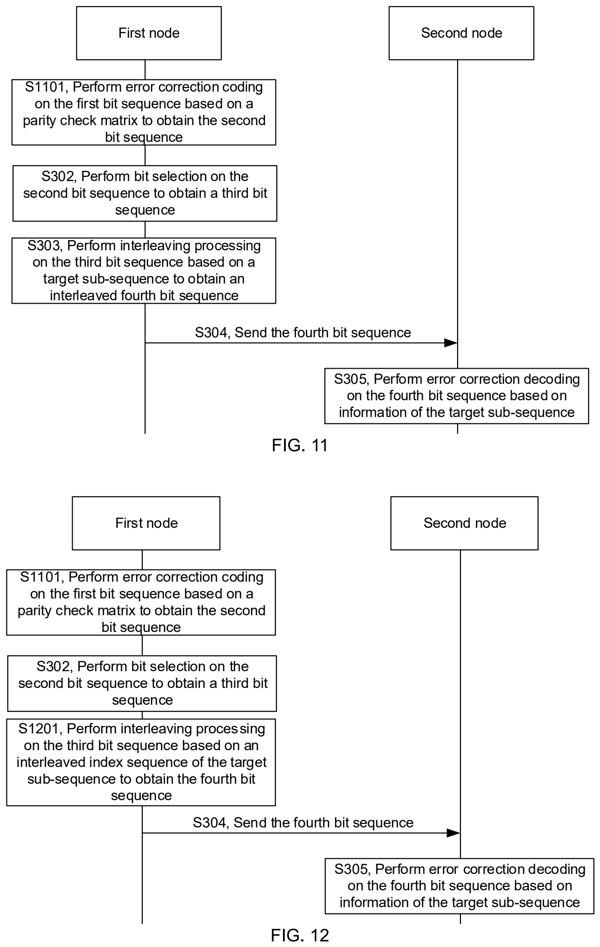

In an optional embodiment, as shown in S301, the first node performs error correction coding on the first bit sequence to obtain the second bit sequence. In the embodiments of the present disclosure, a possible implementation of S301 based on the method embodiments shown in FIG. 3 may be provided. As shown in FIG. 11, FIG. 11 is an implementation of S301 provided in the present disclosure. Therefore, the implementation process of the first node performing error correction coding on the first bit sequence to obtain the second bit sequence (i.e., S301) may include the following S1101.

In S1101, the first node performs error correction coding on the first bit sequence based on a parity check matrix to obtain the second bit sequence.

Herein, the parity check matrix is determined according to a lifting size and a base matrix.

As a possible implementation, in combination with the above-mentioned embodiments, the implementation process of the above S1101 may be: the first node may determine a parity check matrix with a size of 462 rows and 572 columns based on the lifting size (e.g., 11) and the base matrix (e.g., a matrix of 42 rows and 52 columns). Next, the first node performs error correction coding on the first bit sequence based on the parity check matrix determined above to obtain the second bit sequence.

In some examples, the parity check matrix includes a plurality of sub-matrix blocks, each sub-matrix block is an identity matrix or an all-zero square matrix. Each element of the base matrix corresponds to a sub-matrix block, and the base matrix includes two kinds of elements: a kind of elements indicate circular shifting of a identity matrix and another kind of elements indicate an all-zero square matrix. The lifting size is used to indicate dimensions of the identity matrix and the all-zero square matrix, and the lifting size is a positive integer.

In some examples, in a case where the lifting size is Z: when an element in the base matrix is smaller than 0, a sub-matrix block corresponding to the element is a all-zero square matrix with a dimension of Z*Z; when the element in the base matrix is greater than or equal to 0, the sub-matrix block corresponding to the element is a identity matrix with a dimension of Z*Z, and a specific numerical value of the element is used to indicate a number of bits of circular shifting of the identity matrix.

In some examples, if the dimension of the base matrix is a*b and the lifting size is Z, then the dimension of the parity check matrix corresponding to the base matrix is a*Z rows and b*Z columns. Furthermore, the columns of the parity check matrix include a system column and a parity column. For example, for a parity check matrix with a dimension of aZ*bZ, it is assumed that a number of columns of the parity check matrix is bZ and a number of rows is aZ, then a number of parity columns of the parity check matrix is equal to a number of rows aZ of the parity check matrix, and a number of system columns of the parity check matrix is equal to a difference between the number of columns and the number of rows, that is, bZ-aZ. Correspondingly, the length of the second bit sequence obtained by performing error correction coding on the first bit sequence is equal to the number of columns of the parity check matrix. The second bit sequence includes a system bit sequence and a parity bit sequence, for example, the second bit sequence C=[S; P], where S is the system bit sequence, P is the parity bit sequence, and the parity check matrix is H=[Hs, Hp], where a matrix formed by the system columns is Hs, and a matrix formed by the parity columns is Hp. According to a rule of error correction coding, $H \times C=0$ is satisfied, where 0 is an all-zero vector with a length equal to H rows. Thus, $H \times C=[Hs, Hp] \times [S; P]=Hs \times S+Hp \times P=0$. It can be seen that the system bit sequence of the second bit sequence corresponds to a system column of the parity check matrix; the parity bit sequence of the second bit sequence corresponds to a parity column of the parity check matrix. The first bit sequence is a system bit sequence of the second bit sequence, that is, the length of the first bit sequence is equal to bZ - aZ.

In some optional examples, system columns of the parity check matrix are composed of first bZ-aZ columns, and corresponding system column indexes may be {0, 1, ..., bZ-aZ-1}; parity columns are composed of the last aZ columns, and corresponding parity column indexes may be {bZ-aZ, bZ-aZ+1, ..., bZ-1}. Exemplarily, in a parity check matrix with a size of 462 rows and 572 columns determined based on the lifting size (e.g., 11) and the base matrix (e.g., a matrix of 42 rows and 52 columns), system column indexes are {0, 1, ..., 109}, and indexes of parity columns are {110, 111, ..., 571}. Correspondingly, in the second bit sequence obtained after being performed error correction coding, an index of the system bit sequence is {0, 1, ..., 109}, and an index of the parity bit sequence is {110, 111, ..., 571}.

Optionally, a circular shifting value of the identity matrix is generally described by an integer, and its specific value directly describes an amount of the circular shifting of the identity matrix. The elements of an all-zero square matrix are generally represented by (-1) (or an empty value or null). Exemplarily, taking a base matrix of 4 rows and 16 columns and a lifting size of 8 as an example, a size of the parity check matrix determined by the first node based on the base matrix and the lifting size is 4*8 rows and 16*8 columns.

In a scenario shown in FIG. 11 above, the target sub-sequence may also have the following features.

In some embodiments, an index of a first element of the target sub-sequence in the second bit sequence is equal to a non-negative integer multiple of the lifting size. For example, the index of the first element of the target sub-sequence in the second bit sequence is equal to 2*Z, where Z is the lifting size.

Exemplarily, taking the lifting size as 8 as an example: the first node may determine that the index of the first element of the target sub-sequence in the second bit sequence may be equal to 16 (i.e., 2*8), or 32 (i.e., 4*8).

In some embodiments, the length of the target sub-sequence is shorter than or equal to the lifting size.

In some embodiments, a difference between an index of a first element of the target sub-sequence in the second bit sequence and an index of a last element of the target sub-sequence in the second bit sequence is smaller than the lifting size.

Exemplarily, taking the lifting size of 8 as an example: indexes of all elements of the target sub-sequence in the second bit sequence are {16, 17, 18, 19, 20}, that is, the index of the first element of the target sub-sequence in the second bit sequence is equal to 16, and the index of the last element in the second bit sequence is equal to 20.

Optionally, there are at least C elements of the target sub-sequence whose indexes in the second bit sequence are equal to a non-negative integer multiple of the lifting size. Herein, C is an integer greater than 1.

In an example, taking the length as 5 and the lifting size as 8 as an example, the first node may determine that an index sequence of the target sub-sequence in a coding sequence is {0, 1, 8, 16, 24}.

In another example, taking the length as 5 and the lifting size as 8 as an example: the first node may determine that the index sequence of the target sub-sequence in the coding sequence is {0, 8, 16, 24, 32}. That is, the indexes of all elements of the target sub-sequence in the second bit sequence are equal to non-negative integer multiples of the lifting size.

In some embodiments, indexes of elements of the target sub-sequence in the second bit sequence are equal to system column indexes of the parity check matrix.

Exemplarily, if the parity check matrix has 64 system columns, and corresponding indexes are {0, 1, ..., 63}, and indexes of elements of the target sub-sequence in the second bit sequence are {0, 1, 2}.

In some embodiments, indexes of L elements of the target sub-sequence in the second bit sequence are indexes of L columns with a smallest column weight of the parity check matrix, and L is a length of the target sub-sequence, and L is a positive integer.

Exemplarily, taking a parity check matrix with a size of 60 rows and 120 columns as an example, column indexes corresponding to a column weight of 2 in the parity check matrix are 87 to 119, column indexes corresponding to a column weight of 3 in the parity check matrix are 64 to 79, column indexes corresponding to a column weight of 4 in the parity check matrix are 41 to 63, column indexes corresponding to a column weight of 5 in the parity check matrix are 20 to 40, column indexes corresponding to a column weight of 6 in the parity check matrix are 0 to 19, and column indexes corresponding to a column weight of 7 in the parity check matrix are 80 to 86:

if L is 7, the first node may determine that an index sequence of L elements of the target sub-sequence in the second bit sequence is {87, 88, 89, 90, 91, 92, 93}.

In some embodiments, the indexes of the L elements of the target sub-sequence in the second bit sequence are determined according to the column weight of the parity check matrix. For example, the indexes of the L columns with the smallest column weight of the parity check matrix are used as indexes of the L elements of the target sub-sequence in the second bit sequence; if L is 4, the first node may determine that the index sequence of the L elements of the target sub-sequence in the second bit sequence is {87, 88, 89, 90}. Or for example, the indexes of the L columns with the greatest column weight of the parity check matrix are used as indexes of the L elements of the target sub-sequence in the second bit sequence; if L is 5, the first node may determine that the index sequence of the L elements in the target sub-sequence in the second bit sequence is {80, 81, 82, 83, 84}.

In a possible implementation, the first node determines the base matrix according to a base graph, and determines the parity check matrix based on the base matrix and the lifting size. Next, the first node performs error correction coding on the first bit sequence based on the parity check matrix to obtain the second bit sequence.

Optionally, the above-mentioned base graph includes two kinds of base graphs, namely a first base graph and a second base graph, where a base matrix size corresponding to the first base graph is 46 rows and 68 columns, and a base matrix size corresponding to the second base graph is 42 rows and 52 columns.

When one of the following conditions is met, the base matrix is determined according to the second base graph, and the parity check matrix is determined according to the base matrix: condition 1, a transport block size is smaller than or equal to 292; condition 2, the transport block size is smaller than or equal to 3824, a code rate is lower than 0.67; condition 3, the code rate is lower than 0.25. Conversely, the base matrix is determined according to the first base graph, and the parity check matrix is determined according to the base matrix.

In an embodiment, a row number of the base matrix is smaller than or equal to a preset row number threshold, or a column number of the base matrix is smaller than or equal to a preset column number threshold, or a number of system columns of the base matrix is smaller than or equal to a preset system column number threshold, or a number of coding system columns is smaller than or equal to a fifth preset threshold, or the lifting size is smaller than or equal to a preset lifting size threshold. Herein, the number of system columns of the base matrix is equal to a difference between the column number and the row number, the number of coding system columns is an positive integer smaller than or equal to the number of system columns of the base matrix, and the number of coding system columns may be used to calculate the lifting size. For example, the number of system columns of the base matrix is equal to 10, and the number of coding system columns may be 6, 8, 9, or 10.

Exemplarily, the above-mentioned preset row number threshold may be 42, and the preset column number threshold may be 52, and in this case, the base matrix may be a base matrix corresponding to the second base graph. The preset system column number threshold may be equal to 10. The fifth preset threshold may be equal to one of the following: 6, 8, 9, 10. In a specific example, the fifth preset threshold is equal to 6; or the fifth preset threshold is equal to 8; or the fifth preset threshold is equal to 9.

In an embodiment, the lifting size is smaller than or equal to a preset lifting size threshold. Herein, the preset lifting size threshold may be equal to 32, 48, 56, 64, 72, 80, 88, 96, 104 or 128.

It should be pointed out that, the base matrix corresponding to the first base graph and the base matrix corresponding to the second base graph are base matrices defined in 3GPP standard protocol 38.212, which will not be repeated herein.

In an example, when a base graph is the second base graph, the length of a target bit sequence is greater than 0;

when the base graph is the first base graph, the length of the target bit sequence is equal to 0. When the length of the target bit sequence is equal to 0, there is no need to perform interleaving on the third bit sequence.

In the technical solutions provided in the embodiments of the present disclosure, the first node performs error correction coding on the first bit sequence based on the parity check matrix to obtain the second bit sequence, so that the first node can subsequently determine the target sub-sequence based on the information of the above parity check matrix.

In an optional embodiment, as shown in S303, the first node performs interleaving processing on the third bit sequence based on the target sub-sequence to obtain the interleaved fourth bit sequence. In the embodiments of the present disclosure, a possible implementation of S303 based on the method embodiments shown in FIG. 3 may be provided. In combination with FIG. 11, as shown in FIG. 12, FIG. 12 is an implementation of S303 provided in the present disclosure. Therefore, the implementation process of the first node performing interleaving processing on the third bit sequence based on the target sub-sequence to obtain the interleaved fourth bit sequence (i.e., S303) may include the following S1201.

In S1201, the first node performs interleaving processing on the third bit sequence based on an interleaved index sequence corresponding to the target sub-sequence to obtain the fourth bit sequence.

Herein, two interleaved index sequences respectively corresponding to any two different target sub-sequences are different. That is, if A is an interleaved index sequence, $A_i$ is an i-th element in A, B is another interleaved index sequence, $B_i$ is an i-th element in B, then any i satisfies $A_i \neq B_i$, where i is a natural number.

It should be noted that, for performing circular shifting on the third bit sequence with a length E, there are at most E circular shifting methods, that is, E circular shifting methods with numbers of bits for circular shifting from 0 to E-1. If circular shifting methods are different, interleaved index sequences corresponding to the different circular shifting methods are different. Since the length of the target sub-sequence is an integer obtained by taking a logarithm of E with a base 2 and then rounding down, a number of interleaved index sequences corresponding to a target sub-sequence with the same length is 2 to a power of L (2^L), and 2^L is smaller than or equal to E. Therefore, the circular shift interleaving method may achieve that any two interleaved index sequences are different.

In a possible implementation, the fourth bit sequence may satisfy the following formula 11:

$$F1=F0(A) \qquad\qquad \text{Formula 11}$$

where F1 is a fourth bit sequence, F0 is a third bit sequence, and A is an interleaved index sequence.

In some embodiments, there are at most T elements having identical values at same positions in two interleaved index sequences respectively corresponding to any two different target sub-sequences, and T is a positive integer. That is, if A is an interleaved index sequence, $A_i$ is an i-th element in A, B is another interleaved index sequence, $B_i$ is an i-th element in B, then there are at most T indexes i that satisfy $A_i=B_i$.

For example, T is equal to 1, 2, 3, 4, or 5. The first node may limit T, and control T to be smaller than or equal to a first preset threshold, so as to avoid a near codeword problem (i.e., fourth bit sequences correspondingly output based on different first bit sequences are the same), which may cause the second node to be unable to decode correctly or to have errors during the error correction decoding process.

Optionally, there are values of at most W% elements at the same position being the same in two interleaved index sequences corresponding to any two different target sub-sequences, where W is a real number greater than 0 and smaller than 20. For example, W is equal to 1, 2, 3, 4, or 5. For example, in a case where W is 2, and a length of an interleaved index sequence is 128, there are at most two elements at two index positions in any two interleaved index sequences being the same, that is, T is 2.

In the technical solutions provided in the embodiments of the present disclosure, the first node performs interleaving processing on the third bit sequence based on the interleaved index sequence corresponding to the target sub-sequence to obtain the fourth bit sequence, where two interleaved index sequences respectively corresponding to any two different target sub-sequences are different, or there are at most T elements having identical values at same positions in two interleaved index sequences respectively corresponding to any two different target sub-sequences. In this way, the first node may adaptively performs interleaving on the third bit sequence, thereby avoiding, as much as possible, obtained identical fourth bit sequences by performing interleaving based on different third bit sequences, and consequently avoiding the near codeword problem.

The various solutions in the above-mentioned embodiments of the present disclosure may be combined on the premise of no contradiction.

The embodiments of the present disclosure may divide the signal detection apparatus into functional modules or functional units according to the above method examples. For example, division of each functional modules or each functional units may be performed corresponding to each function, or two or more functions may be integrated into a processing module. The above integrated module may be implemented in the form of hardware, or may be implemented in the form of a software function module or a functional unit. Herein, the division for modules or units in the embodiments of the present disclosure is illustrative, which is only a logical function division, and there may be another division manner in actual implementation.

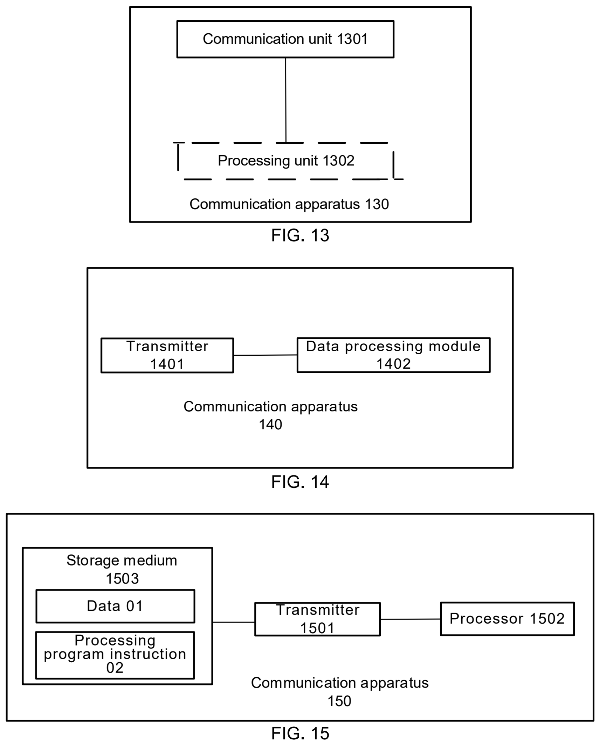

In a case where each functional module division corresponds each function, FIG. 13 shows a structural schematic diagram of a communication apparatus 130. The communication apparatus 130 shown in FIG. 13 may include: a communication unit 1301 and a processing unit 1302. Since the communication apparatus configured to execute the functions involved in the second node in the above embodiments is similar to the communication apparatus configured to execute the functions involved in the first node in the above embodiments, the communication apparatus 130 may be configured to execute both the functions involved in the first node in the above embodiments and the functions involved in the second node in the above embodiments.

In a case where the communication apparatus 130 is configured to perform the functions involved in the first node in the above embodiments:

the processing unit 1302 is configured to perform error correction coding on a first bit sequence to obtain a second bit sequence; perform bit selection on the second bit sequence to obtain a third bit sequence; perform interleaving processing on the third bit sequence based on a target sub-sequence to obtain an interleaved fourth bit sequence, where the target sub-sequence is a sub-sequence of the first bit sequence or a sub-sequence of the second bit sequence, and a length of the target sub-sequence is an integer greater than 0;
the communication unit 1301 is configured to send the fourth bit sequence.

In a possible implementation, the target sub-sequence is composed of one or more consecutive bits in the second bit sequence; or the target sub-sequence is composed of one or more discrete bits in the second bit sequence.

In a possible implementation, an index corresponding to an element of the target sub-sequence in the second bit sequence is different from an index corresponding to an element of the third bit sequence in the second bit sequence.

In a possible implementation, the length of the target sub-sequence is determined according to a length of the first bit sequence or a length of the third bit sequence.

In a possible implementation, the target sub-sequence is determined according to one or more of: the second bit sequence, a length of the third bit sequence, a length of the first bit sequence, a length of valid information bits, a modulation order, a code rate, a number of resources, a higher layer signaling, a user equipment type, or a transport block size.

In a possible implementation, the processing unit 1302 is specifically configured to: perform the error correction coding on the first bit sequence based on a parity check matrix to obtain the second bit sequence, where the parity check matrix is determined according to a lifting size and a base matrix.

In a possible implementation, an index of a first element of the target sub-sequence in the second bit sequence is equal to a non-negative integer multiple of the lifting size.

In a possible implementation, indexes of elements of the target sub-sequence in the second bit sequence are equal to system column indexes of the parity check matrix.

In a possible implementation, indexes of L elements of the target sub-sequence in the second bit sequence are indexes of L columns with a smallest column weight of the parity check matrix, and L is a length of the target sub-sequence, and L is a positive integer.

In a possible implementation, the processing unit 1302 is specifically configured to: perform the interleaving processing on the third bit sequence based on an interleaved index sequence corresponding to the target sub-sequence to obtain the fourth bit sequence, where two interleaved index sequences respectively corresponding to any two different target sub-sequences are different.

In a possible implementation, the processing unit 1302 is specifically configured to: perform the interleaving processing on the third bit sequence based on an interleaved index sequence corresponding to the target sub-sequence to obtain the fourth bit sequence, where there are at most T elements having identical values at same positions in two interleaved index sequences respectively corresponding to any two different target sub-sequences, and T is a positive integer.

In a possible implementation, the interleaving processing comprises: circular interleaving processing and/or block interleaving processing.

In a possible implementation, the first bit sequence is determined based on a transport block to be transmitted, and a transport block size of the transport block to be transmitted is smaller than or equal to a first preset threshold.

In a possible implementation, a length of the first bit sequence is shorter than or equal to a second preset threshold.

In a possible implementation, a row number of the base matrix is smaller than or equal to a preset row number threshold, or a column number of the base matrix is smaller than or equal to a preset column number threshold, or a number of system columns of the base matrix is smaller than or equal to a preset system column number threshold, or a number of coding system columns is smaller than or equal to a fifth preset threshold, where the number of coding system columns is used to calculate the lifting size; or the lifting size is smaller than or equal to a preset lifting size threshold.

In a case where the communication apparatus 130 is configured to perform the functions involved in the second node in the above embodiments:

the communication unit 1301 is configured to receive a fourth bit sequence from a first node, where the fourth bit sequence is obtained by performing interleaving processing on a third bit sequence based on a target sub-sequence of a second bit sequence, the second bit sequence is obtained by performing error correction coding on a first bit sequence, and the third bit sequence is obtained by performing bit selection on the second bit sequence; and a length of the target sub-sequence is an integer greater than 0;

the processing unit 1302 is configured to perform error correction decoding on the fourth bit sequence based on information of the target sub-sequence.

In a possible implementation, the target sub-sequence is composed of one or more consecutive bits in the second bit sequence; or the target sub-sequence is composed of one or more discrete bits in the second bit sequence.

In a possible implementation, an index corresponding to an element of the target sub-sequence in the second bit sequence is different from an index corresponding to an element of the third bit sequence in the second bit sequence.

In a possible implementation, the length of the target sub-sequence is determined according to a length of the first bit sequence or a length of the third bit sequence.

In a possible implementation, the target sub-sequence is determined according to one or more of: the second bit sequence, a length of the third bit sequence, a length of the first bit sequence, a length of valid information bits, a modulation order, a code rate, a number of resources, a higher layer signaling, a user equipment type, or a transport block size.

In a possible implementation, the second bit sequence is obtained by performing the error correction coding on the first bit sequence based on a parity check matrix, and the parity check matrix is determined according to a lifting size and a base matrix.

In a possible implementation, an index of a first element of the target sub-sequence in the second bit sequence is equal to a non-negative integer multiple of the lifting size.

In a possible implementation, indexes of elements of the target sub-sequence in the second bit sequence are equal to system column indexes of the parity check matrix.

In a possible implementation, indexes of L elements of the target sub-sequence in the second bit sequence are indexes of L columns with a smallest column weight of the parity check matrix, and L is a length of the target sub-sequence, and L is a positive integer.

In a possible implementation, the fourth bit sequence is obtained by performing interleaving processing on the third bit sequence based on an interleaved index sequence corresponding to the target sub-sequence, and two interleaved index sequences respectively corresponding to any two different target sub-sequences are different.

In a possible implementation, the fourth bit sequence is obtained by performing interleaving processing on the third bit sequence based on an interleaved index sequence corresponding to the target sub-sequence, and there are at most T elements having identical values at same positions in two interleaved index sequences respectively corresponding to any two different target sub-sequences, and T is a positive integer.

In a possible implementation, the interleaving processing comprises: circular interleaving processing and/or block interleaving processing.

In a possible implementation, the first bit sequence is determined based on a transport block to be transmitted, and a transport block size of the transport block to be transmitted is smaller than or equal to a first preset threshold.

In a possible implementation, a length of the first bit sequence is shorter than or equal to a second preset threshold.

In a possible implementation, a row number of the base matrix is smaller than or equal to a preset row number threshold, or a column number of the base matrix is smaller than or equal to a preset column number threshold, or a number of system columns of the base matrix is smaller than or equal to a preset system column number threshold, or a number of coding system columns is smaller than or equal to a fifth preset threshold, where the number of coding system columns is used to calculate the lifting size; or the lifting size is smaller than or equal to a preset lifting size threshold.

As yet another possible implementation, the processing unit 1302 in FIG. 13 may be replaced by a processor, and the processor may integrate functions of the processing unit 1302.

Further, in response to that the processing unit 1302 is replaced by the processor, the communication apparatus 130 involved in the embodiments of the present disclosure may be the communication apparatus shown in FIG. 2.

In a case of dividing each functional module according to each function, FIG. 14 shows a structural schematic diagram of a communication apparatus 140. The communication apparatus 140 shown in FIG. 14 may include: a transmitter 1401 and data processing module 1402. The communication apparatus 140 may be configured to perform the functions involved in the first node in the above embodiments.

The data processing module 1402 is configured to perform error correction coding on a first bit sequence to obtain a second bit sequence; perform bit selection on the second bit sequence to obtain a third bit sequence; perform interleaving processing on the third bit sequence based on a target sub-sequence to obtain an interleaved fourth bit sequence, where the target sub-sequence is a sub-sequence of the first bit sequence or a sub-sequence of the second bit sequence, and a length of the target sub-sequence is an integer greater than 0.

The transmitter 1401 is configured to send the fourth bit sequence.

In a possible implementation, the target sub-sequence is composed of one or more consecutive bits in the second bit sequence; or the target sub-sequence is composed of one or more discrete bits in the second bit sequence.

In a possible implementation, an index corresponding to an element of the target sub-sequence in the second bit sequence is different from an index corresponding to an element of the third bit sequence in the second bit sequence.

In a possible implementation, the length of the target sub-sequence is determined according to a length of the first bit sequence or a length of the third bit sequence.

In a possible implementation, the target sub-sequence is determined according to one or more of: the second bit sequence, a length of the third bit sequence, a length of the first bit sequence, a length of valid information bits, a modulation order, a code rate, a number of resources, a higher layer signaling, a user equipment type, or a transport block size.

In a possible implementation, the data processing module 1402 is specifically configured to: perform the error correction coding on the first bit sequence based on a parity check matrix to obtain the second bit sequence, where the parity check matrix is determined according to a lifting size and a base matrix.

In a possible implementation, an index of a first element of the target sub-sequence in the second bit sequence is equal to a non-negative integer multiple of the lifting size.

In a possible implementation, indexes of elements of the target sub-sequence in the second bit sequence are equal to system column indexes of the parity check matrix.

In a possible implementation, indexes of L elements of the target sub-sequence in the second bit sequence are indexes of L columns with a smallest column weight of the parity check matrix, and L is a length of the target sub-sequence, and L is a positive integer.

In a possible implementation, the data processing module 1402 is specifically configured to: perform the interleaving processing on the third bit sequence based on an interleaved index sequence corresponding to the target sub-sequence to obtain the fourth bit sequence, where two interleaved index sequences respectively corresponding to any two different target sub-sequences are different.

In a possible implementation, the data processing module 1402 is specifically configured to: perform the interleaving processing on the third bit sequence based on an interleaved index sequence corresponding to the target sub-sequence to obtain the fourth bit sequence, where there are at most T elements having identical values at same positions in two interleaved index sequences respectively corresponding to any two different target sub-sequences, and T is a positive integer.

In a possible implementation, the interleaving processing comprises: circular interleaving processing and/or block interleaving processing.

In a possible implementation, the first bit sequence is determined based on a transport block to be transmitted, and a transport block size of the transport block to be transmitted is smaller than or equal to a first preset threshold.

In a possible implementation, a length of the first bit sequence is shorter than or equal to a second preset threshold.

In a possible implementation, a row number of the base matrix is smaller than or equal to a preset row number threshold, or a column number of the base matrix is smaller than or equal to a preset column number threshold, or a number of system columns of the base matrix is smaller than or equal to a preset system column number threshold, or a number of coding system columns is smaller than or equal to a fifth preset threshold, where the number of coding system columns is used to calculate the lifting size; or the lifting size is smaller than or equal to a preset lifting size threshold.

In a case of dividing each functional module according to each function, FIG. 15 shows a structural schematic diagram of a communication apparatus 150. The communication apparatus 150 shown in FIG. 15 may include: a transmitter 1501, a processor 1502, and a storage medium 1503. The communication apparatus 150 may be configured to perform the functions involved in the first node or the second node in the above embodiments.

The processor 1502 is configured to perform error correction coding on a first bit sequence to obtain a second bit sequence; perform bit selection on the second bit sequence to obtain a third bit sequence; perform interleaving processing on the third bit sequence based on a target sub-sequence to obtain an interleaved fourth bit sequence, where the target sub-sequence is a sub-sequence of the first bit sequence or a sub-sequence of the second bit sequence, and a length of the target sub-sequence is an integer greater than 0.

The transmitter 1501 is configured to send the fourth bit sequence.

In a possible implementation, the target sub-sequence is composed of one or more consecutive bits in the second bit sequence; or the target sub-sequence is composed of one or more discrete bits in the second bit sequence.

In a possible implementation, an index corresponding to an element of the target sub-sequence in the second bit sequence is different from an index corresponding to an element of the third bit sequence in the second bit sequence.

In a possible implementation, the length of the target sub-sequence is determined according to a length of the first bit sequence or a length of the third bit sequence.

In a possible implementation, the target sub-sequence is determined according to one or more of: the second bit sequence, a length of the third bit sequence, a length of the first bit sequence, a length of valid information bits, a modulation order, a code rate, a number of resources, a higher layer signaling, a user equipment type, or a transport block size.

In a possible implementation, the processor 1502 is specifically configured to: perform the error correction coding on the first bit sequence based on a parity check matrix to obtain the second bit sequence, where the parity check matrix is determined according to a lifting size and a base matrix.

In a possible implementation, an index of a first element of the target sub-sequence in the second bit sequence is equal to a non-negative integer multiple of the lifting size.

In a possible implementation, indexes of elements of the target sub-sequence in the second bit sequence are equal to system column indexes of the parity check matrix.

In a possible implementation, indexes of L elements of the target sub-sequence in the second bit sequence are indexes of L columns with a smallest column weight of the parity check matrix, and L is a length of the target sub-sequence, and L is a positive integer.

In a possible implementation, the processor 1502 is specifically configured to: perform the interleaving processing on the third bit sequence based on an interleaved index sequence corresponding to the target sub-sequence to obtain the fourth bit sequence, where two interleaved index sequences respectively corresponding to any two different target sub-sequences are different.

In a possible implementation, the processor 1502 is specifically configured to: perform the interleaving processing on the third bit sequence based on an interleaved index sequence corresponding to the target sub-sequence to obtain the fourth bit sequence, where there are at most T elements having identical values at same positions in two interleaved index sequences respectively corresponding to any two different target sub-sequences, and T is a positive integer.

In a possible implementation, the interleaving processing comprises: circular interleaving processing and/or block interleaving processing.

In a possible implementation, the first bit sequence is determined based on a transport block to be transmitted, and a transport block size of the transport block to be transmitted is smaller than or equal to a first preset threshold.

In a possible implementation, a length of the first bit sequence is shorter than or equal to a second preset threshold.

In a possible implementation, a row number of the base matrix is smaller than or equal to a preset row number threshold, or a column number of the base matrix is smaller than or equal to a preset column number threshold, or a number of system columns of the base matrix is smaller than or equal to a preset system column number threshold, or a number of coding system columns is smaller than or equal to a fifth preset threshold, where the number of coding system columns is used to calculate the lifting size; or the lifting size is smaller than or equal to a preset lifting size threshold.

Optionally, the processor 1502 (which is coupled between the storage medium 1503 and the transmitter 1501) may be any suitable processor capable of executing instructions or scripts of one or more software programs stored in the communication apparatus 200 (e.g., in the memory 204). For example, the processor 1502 may execute a processing program instruction 02 and process data 01. The transmitter 1501 may be configured to send data to the second node. Herein, each software program module in the memory 204 may include instructions, these instructions, upon being executed by the processor 1502, may enable the communication apparatus 200 to perform corresponding functions. Thus, the non-transitory computer-readable storage medium of storage medium 1503 may include instructions for performing all or a portion of the operations described above. It should be noted that although the processing program instruction 02 is depicted as a software instruction in the storage medium 1503, it may be implemented in software, firmware, or a combination of the two.

Optionally, the storage medium 1503 may include the data 01 and the processing program instruction 02, where the data 01 may include: a first bit sequence, a length of a target sub-sequence, an index corresponding to an element of the target sub-sequence in the second bit sequence, and a local cache of other signaling parameters and/or the second bit sequence. The processing program instruction 02 may be used to store the following codes or instructions: software codes or instructions for data processing, and the software codes or instructions for data processing may include the data processing method shown in any of the above embodiments.

A computer-readable storage medium is further provided in the embodiments of the present disclosure. All or part of the processes in the above method embodiments can be implemented by a computer program instructing relevant hardware. The program can be stored in the above-mentioned computer-readable storage medium, and when executed, the program can include the processes as described in the above method embodiments. The computer-readable storage medium may be an internal storage unit of a signal detection apparatus (including a data transmitting end and/or a data receiving end) in any of the aforementioned embodiments, such as a hard disk or a memory of the signal detection apparatus. The above-mentioned computer-readable storage medium may also be an external storage device of the above-mentioned terminal device, such as a plug-in hard disk, a smart media card (SMC), a secure digital (SD) card, a flash card, a non-transitory computer-readable storage medium (for example, one or more non-volatile memory elements, EPROM, EEPROM, flash memory, hard disk drive, etc.), etc., equipped on the above-mentioned terminal device. Furthermore, the above-mentioned computer-readable storage medium may include both an internal storage unit and an external storage device of the above-mentioned signal detection apparatus. The above-mentioned computer-readable storage medium is used to store the above-mentioned computer program and other programs and data required by the above-mentioned signal detection apparatus. The computer-readable storage medium may a further be used to temporarily store data that has been output or is to be output.

It will be noted that, terms such as "first" and "second" in the specification, claims and the accompanying drawings of the present disclosure are used for distinguishing different objects, but not used for describing a particular sequence. In addition, the terms "include/includes/including," "comprise/comprises/comprising," and "have/has/having," and any variations thereof, are intended to cover a non-exclusive inclusion. For example, a process, a method, a system, a product or a device that includes a series of steps or units is not limited to the listed steps or units, but optionally further includes other unlisted steps or units, or optionally further includes other steps or units inherent to the process, the method, the product or the device.

Through the description of the above implementations, those of ordinary skill in the art can clearly understand that for the convenience and simplicity of the description, the division of the above functional modules is given merely as an example. In practical applications, the above functions can be allocated to different functional modules according to requirements, that is, the internal structure of the apparatus can be divided into different functional modules to complete all or part of the functions described above.

In the several embodiments provided in the present disclosure, it should be understood that the disclosed apparatuses and methods can be implemented in other ways. For example, the apparatus embodiments described above are only illustrative. For example, the division of modules or units is only a logical functional division. In actual implementation, there may be other division methods, for example, multiple units or components can be combined or integrated into another apparatus, or some features can be ignored or not performed. On the other hand, the coupling or direct coupling or communicative connection between each other as shown or discussed above may be an indirect coupling or a communicative connection via some interfaces, apparatus or units, which may be electrical, mechanical, or in other forms.

The units described as separate components may or may not be physically separated, and the component(s) shown as units may be one physical unit or multiple physical units, that is, may be located in one place, or may be distributed to multiple different places. A portion or all of the units may be selected according to actual needs to implement the purpose of the embodiments.

In addition, the functional units in the embodiments of the present disclosure may be integrated into a single processing unit or the functional units may exist physically and separately, or two or more units may be integrated into a unit. The above integrated unit may be implemented in the form of hardware, or may be implemented in the form of a software functional unit.

If the integrated unit is implemented in the form of the software functional unit and sold or used as an independent product, the integrated unit may be stored in a readable storage medium. Based on this understanding, the technical solutions of the present disclosure may be essentially, or a part of the technical solutions of the present disclosure that contributes to the prior art may be, all or part of the technical solutions may be, embodied in the form of a software product, and the software product is stored in a storage medium, which includes several instructions to enable a device (which may be a single-chip microcomputer, a chip, etc.) or a processor to perform all or part of steps of methods in various embodiments of the present disclosure. The aforementioned storage media include: a U disk, a mobile hard disk, a ROM, a RAM, a magnetic disk or an optical disk and other media that may store program codes.

The above descriptions are merely specific implements of the present disclosure, but the scope of protection of the present disclosure is not limited thereto, and any variations or replacements within the technical scope disclosed in the present disclosure shall fall within the protection scope of the present disclosure. Therefore, the protection scope of the present disclosure should be subject to the protection scope of the claims.

**Claims**

1. A data transmission method, **characterized by** being applied to a first node, wherein the method comprises:

performing error correction coding on a first bit sequence to obtain a second bit sequence;
performing bit selection on the second bit sequence to obtain a third bit sequence;

performing interleaving processing on the third bit sequence based on a target sub-sequence to obtain an interleaved fourth bit sequence, wherein the target sub-sequence is a sub-sequence of the first bit sequence or a sub-sequence of the second bit sequence, and a length of the target sub-sequence is an integer greater than 0; and

sending the fourth bit sequence.

2. The method according to claim 1, wherein the target sub-sequence is composed of one or more consecutive bits in the second bit sequence; or the target sub-sequence is composed of one or more discrete bits in the second bit sequence.

3. The method according to claim 1, wherein an index corresponding to an element of the target sub-sequence in the second bit sequence is different from an index corresponding to an element of the third bit sequence in the second bit sequence.

4. The method according to claim 1, wherein the length of the target sub-sequence is determined according to a length of the first bit sequence or a length of the third bit sequence.

5. The method according to claim 1, wherein the target sub-sequence is determined according to one or more of: the second bit sequence, a length of the third bit sequence, a length of the first bit sequence, a length of valid information bits, a modulation order, a code rate, a number of resources, a higher layer signaling, a user equipment type, or a transport block size.

6. The method according to claim 1, wherein performing the error correction coding on the first bit sequence to obtain the second bit sequence comprises:
performing the error correction coding on the first bit sequence based on a parity check matrix to obtain the second bit sequence, wherein the parity check matrix is determined according to a lifting size and a base matrix.

7. The method according to claim 6, wherein an index of a first element of the target sub-sequence in the second bit sequence is equal to a non-negative integer multiple of the lifting size.

8. The method according to claim 6, wherein indexes of elements of the target sub-sequence in the second bit sequence are equal to system column indexes of the parity check matrix.

9. The method according to any one of claims 6 to 8, wherein indexes of L elements of the target sub-sequence in the second bit sequence are indexes of L columns with a smallest column weight of the parity check matrix, and L is a length of the target sub-sequence, and L is a positive integer.

10. The method according to claim 1, wherein performing the interleaving processing on the third bit sequence based on the target sub-sequence to obtain the interleaved fourth bit sequence comprises:
performing the interleaving processing on the third bit sequence based on an interleaved index sequence corresponding to the target sub-sequence to obtain the fourth bit sequence, wherein two interleaved index sequences respectively corresponding to any two different target sub-sequences are different.

11. The method according to claim 1, wherein performing the interleaving processing on the third bit sequence based on the target sub-sequence to obtain the interleaved fourth bit sequence comprises:
performing the interleaving processing on the third bit sequence based on an interleaved index sequence corresponding to the target sub-sequence to obtain the fourth bit sequence, wherein there are at most T elements having identical values at same positions in two interleaved index sequences respectively corresponding to any two different target sub-sequences, and T is a positive integer.

12. The method according to any one of claims 1, 10, 11, wherein the interleaving processing comprises: circular interleaving processing and/or block interleaving processing.

13. The method according to claim 1, wherein the first bit sequence is determined based on a transport block to be transmitted, and a transport block size of the transport block to be transmitted is smaller than or equal to a first preset threshold.

14. The method according to claim 1, wherein a length of the first bit sequence is shorter than or equal to a second preset threshold.

15. The method according to any one of claims 6 to 8, wherein

a row number of the base matrix is smaller than or equal to a preset row number threshold, or
a column number of the base matrix is smaller than or equal to a preset column number threshold, or
a number of system columns of the base matrix is smaller than or equal to a preset system column number threshold, or
a number of coding system columns is smaller than or equal to a fifth preset threshold, wherein the number of coding system columns is used to calculate the lifting size; or the lifting size is smaller than or equal to a preset lifting size threshold.

16. A data transmission method, **characterized by** being applied to a second node, wherein the method comprises:

receiving a fourth bit sequence from a first node, wherein the fourth bit sequence is obtained by performing interleaving processing on a third bit sequence based on a target sub-sequence, a second bit sequence is obtained by performing error correction coding on a first bit sequence, and the third bit sequence is obtained by performing bit selection on the second bit sequence; the target sub-sequence is a sub-sequence of the first bit sequence or a sub-sequence of the second bit sequence, and a length of the target sub-sequence is an integer greater than 0; and
performing error correction decoding on the fourth bit sequence based on information of the target sub-sequence.

17. The method according to claim 16, wherein the target sub-sequence is composed of one or more consecutive bits in the second bit sequence; or the target sub-sequence is composed of one or more discrete bits in the second bit sequence.

18. The method according to claim 16, wherein an index corresponding to an element of the target sub-sequence in the second bit sequence is different from an index corresponding to an element of the third bit sequence in the second bit sequence.

19. The method according to claim 16, wherein the length of the target sub-sequence is determined according to a length of the first bit sequence or a length of the third bit sequence.

20. The method according to claim 16, wherein the target sub-sequence is determined according to one or more of: the second bit sequence, a length of the third bit sequence, a length of the first bit sequence, a length of valid information bits, a modulation order, a code rate, a number of resources, a higher layer signaling, a user equipment type, or a transport block size.

21. The method according to claim 16, wherein the second bit sequence is obtained by performing the error correction coding on the first bit sequence based on a parity check matrix, and the parity check matrix is determined according to a lifting size and a base matrix.

22. The method according to claim 21, wherein an index of a first element of the target sub-sequence in the second bit sequence is equal to a non-negative integer multiple of the lifting size.

23. The method according to claim 21, wherein indexes of elements of the target sub-sequence in the second bit sequence are equal to system column indexes of the parity check matrix.

24. The method according to any one of claims 21 to 23, wherein indexes of L elements of the target sub-sequence in the second bit sequence are indexes of L columns with a smallest column weight of the parity check matrix, and L is a length of the target sub-sequence, and L is a positive integer.

25. The method according to claim 16, wherein the fourth bit sequence is obtained by performing interleaving processing on the third bit sequence based on an interleaved index sequence corresponding to the target sub-sequence, and two interleaved index sequences respectively corresponding to any two different target sub-sequences are different.

26. The method according to claim 16, wherein the fourth bit sequence is obtained by performing interleaving processing on the third bit sequence based on an interleaved index sequence corresponding to the target sub-sequence, and there are at most T elements having identical values at same positions in two interleaved index sequences respectively corresponding to any two different target sub-sequences, and T is a positive integer.

27. The method according to any one of claims 16, 25, 26, wherein the interleaving processing comprises: circular interleaving processing and/or block interleaving processing.

28. The method according to claim 16, wherein the first bit sequence is determined based on a transport block to be transmitted, and a transport block size of the transport block to be transmitted is smaller than or equal to a first preset threshold.

29. The method according to claim 16, wherein a length of the first bit sequence is shorter than or equal to a second preset threshold.

30. The method according to any one of claims 21 to 23, wherein a row number of the base matrix is smaller than or equal to a preset row number threshold, or a column number of the base matrix is smaller than or equal to a preset column number threshold, or a number of system columns of the base matrix is smaller than or equal to a preset system column number threshold, or a number of coding system columns is smaller than or equal to a fifth preset threshold, wherein the number of coding system columns is used to calculate the lifting size; or the lifting size is smaller than or equal to a preset lifting size threshold.

31. A communication apparatus, **characterized by** comprising: a processor and a memory for storing instructions executable for the processor;
wherein the processor is configured to execute the instructions, to enable the communication apparatus to perform the method according to any one of claims 1 to 15, and/or to perform the method according to any one of claims 16 to 30.

32. A computer-readable storage medium, wherein computer instructions are stored on the computer-readable storage medium, in response to that the computer instructions are executed on a computer, the computer is enabled to perform the method according to any one of claims 1 to 15, and/or to perform the method according to any one of claims 16 to 30.

FIG. 1

FIG. 2

```
┌─────────────────┐                          ┌─────────────────┐
│   First node    │                          │   Second node   │
└─────────────────┘                          └─────────────────┘
         │                                            │
┌──────────────────────┐                              │
│ S301, Perform error  │                              │
│ correction coding on │                              │
│ a first bit sequence │                              │
│ to acquire a second  │                              │
│ bit sequence         │                              │
└──────────────────────┘                              │
         │                                            │
┌──────────────────────┐                              │
│ S302, Perform bit    │                              │
│ selection on the     │                              │
│ second bit sequence  │                              │
│ to obtain a third    │                              │
│ bit sequence         │                              │
└──────────────────────┘                              │
         │                                            │
┌──────────────────────┐                              │
│ S303, On the basis   │                              │
│ of a target sub-     │                              │
│ sequence, perform    │                              │
│ interleaving         │                              │
│ processing on the    │                              │
│ third bit sequence   │                              │
│ to obtain an         │                              │
│ interleaved fourth   │                              │
│ bit sequence         │                              │
└──────────────────────┘                              │
         │  S304, Send the fourth bit sequence        │
         │───────────────────────────────────────────▶│
         │                              ┌──────────────────────┐
         │                              │ S305, On the basis   │
         │                              │ of information of    │
         │                              │ the target sub-      │
         │                              │ sequence, perform    │
         │                              │ error correction     │
         │                              │ decoding on the      │
         │                              │ fourth bit sequence  │
         │                              └──────────────────────┘
         │                                            │
```

FIG. 3

FIG. 4A

FIG. 4B

0, 1, 2, 3, 4, 5, 6, 7, 8, 9, • • • , 236, 237, 239

Third bit sequence 510

⇩

Control a size of a number
of shifted bits for the cyclic
shifting on the third bit
sequence 510

Left cyclic shift interleaving ◄——— 0, 0, 1, 0, 1, 1, 1

Target sub-sequence 520

⇩

23, 24, 25, 26, 27, 28, • • • , 19, 20, 21, 22

Fourth bit sequence 530

FIG. 5

0101101010101101

Third bit sequence 610

⇨

Read

Write

| 0 | 1 | 0 | 1 |
| 1 | 0 | 1 | 0 |
| 1 | 0 | 1 | 0 |
| 1 | 1 | 0 | 1 |

⇨

| 0 | 1 | 0 | 1 |
| 1 | 0 | 1 | 0 |
| 1 | 0 | 1 | 0 |
| 1 | 1 | 0 | 1 |

⇩

1100101101001011 ⇦ Cyclic interleaving ⇦ 0111100101101001

Fourth bit sequence 640

Sixth bit sequence 630

011

Target sub-sequence 620

FIG. 6

{0,···,L-1}

Target sub-sequence
710

{L,···,E+L-1}

Third bit sequence
730

{E+L,···,N-1}

Second bit sequence
720

FIG. 7

{0,···,E-1}

Third bit sequence
830

{N-L,···,N-1}

Target sub-sequence
810

Second bit
sequence 820

FIG. 8

Second bit
sequence 930

First bit sequence
920

Check sequence

Target sub-sequence 910

Third bit sequence 940

FIG. 9

FIG. 10

First node

Second node

S1101, Perform error correction coding on the first bit sequence based on a parity check matrix to obtain the second bit sequence

S302, Perform bit selection on the second bit sequence to obtain a third bit sequence

S303, Perform interleaving processing on the third bit sequence based on a target sub-sequence to obtain an interleaved fourth bit sequence

S304, Send the fourth bit sequence →

S305, Perform error correction decoding on the fourth bit sequence based on information of the target sub-sequence

FIG. 11

First node

Second node

S1101, Perform error correction coding on the first bit sequence based on a parity check matrix to obtain the second bit sequence

S302, Perform bit selection on the second bit sequence to obtain a third bit sequence

S1201, Perform interleaving processing on the third bit sequence based on an interleaved index sequence of the target sub-sequence to obtain the fourth bit sequence

S304, Send the fourth bit sequence →

S305, Perform error correction decoding on the fourth bit sequence based on information of the target sub-sequence

FIG. 12

Communication unit 1301

Processing unit 1302

Communication apparatus 130

FIG. 13

Transmitter 1401

Data processing module 1402

Communication apparatus 140

FIG. 14

Storage medium 1503

Data 01

Processing program instruction 02

Transmitter 1501

Processor 1502

Communication apparatus 150

FIG. 15

## INTERNATIONAL SEARCH REPORT

| International application No. |
| --- |
| **PCT/CN2023/143519** |

| A. | CLASSIFICATION OF SUBJECT MATTER |
| --- | --- |

H04L 1/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L H03M H04W

Documentation searched other than minimum documentation to the extent that such documents are included in the fields searched

Electronic data base consulted during the international search (name of data base and, where practicable, search terms used)

CNTXT, ENTXTC, ENTXT, VEN: 编码, 恢复, 纠错, 选择, 交织, 比特, 序列, 解码, 循环, 块交织, 冗余, 奇偶校验, encode, recover, error, correct, select, choose, interleave, interlace, bit, sequence, decode, cyclic, LDPC

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114679185 A (ZTE CORP.) 28 June 2022 (2022-06-28) description, paragraphs 67-155, and figures 1-2 | 1-8, 12-23, 27-32 |
| A | CN 114679185 A (ZTE CORP.) 28 June 2022 (2022-06-28) description, paragraphs 67-155, and figures 1-2 | 9-11, 24-26 |
| A | CN 111066252 A (ZTE CORP.) 24 April 2020 (2020-04-24) description, paragraphs 65-121 | 1-32 |
| A | WO 2018103556 A1 (ZTE CORP.) 14 June 2018 (2018-06-14) entire document | 1-32 |
| A | CN 108242976 A (HUAWEI TECHNOLOGIES CO., LTD.) 03 July 2018 (2018-07-03) entire document | 1-32 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 March 2024** | **22 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/143519**

| Patent document cited in search report | | | Publication date (day/month/year) | Patent family member(s) | | | Publication date (day/month/year) |
|---|---|---|---|---|---|---|---|
| CN | 114679185 | A | 28 June 2022 | WO | 2019029309 | A1 | 14 February 2019 |
| | | | | CN | 109391360 | A | 26 February 2019 |
| | | | | IN | 202047010312 | A | 13 March 2020 |
| | | | | AU | 2018314548 | A1 | 02 April 2020 |
| | | | | KR | 20200051634 | A | 13 May 2020 |
| | | | | EP | 3667963 | A1 | 17 June 2020 |
| | | | | US | 2020304235 | A1 | 24 September 2020 |
| | | | | JP | 2020529806 | A1 | 08 October 2020 |
| | | | | RU | 2742912 | C1 | 11 February 2021 |
| | | | | US | 2022158758 | A1 | 19 May 2022 |
| | | | | JP | 2022119993 | A | 17 August 2022 |
| CN | 111066252 | A | 24 April 2020 | KR | 20200054249 | A | 19 May 2020 |
| | | | | US | 2022158658 | A1 | 19 May 2022 |
| | | | | WO | 2019047230 | A1 | 14 March 2019 |
| | | | | CA | 3073980 | A1 | 14 March 2019 |
| | | | | JP | 2021502718 | A | 28 January 2021 |
| | | | | EP | 3682546 | A1 | 22 July 2020 |
| | | | | US | 2020212937 | A1 | 02 July 2020 |
| | | | | IN | 202037008941 | A | 05 June 2020 |
| | | | | VN | 72032 | A | 25 August 2020 |
| | | | | CN | 116054843 | A | 02 May 2023 |
| WO | 2018103556 | A1 | 14 June 2018 | CN | 108234064 | A | 29 June 2018 |
| CN | 108242976 | A | 03 July 2018 | US | 2019305885 | A1 | 03 October 2019 |
| | | | | WO | 2018121248 | A1 | 05 July 2018 |
| | | | | EP | 3528407 | A1 | 21 August 2019 |
| | | | | IN | 201947019419 | A | 14 June 2019 |

Form PCT/ISA/210 (patent family annex) (July 2022)

**EP 4 654 499 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310151615